# EUROPEAN PATENT APPLICATION

(11) **EP 4 592 833 A1**
(43) Date of publication of application: **30.07.2025**
(21) Application number: 24844298.0
(22) Date of filing: 25.04.2024
(51) Int. Cl.: G06F 9/4401

(54) **SYSTEM RUNNING METHOD OF BASEBOARD MANAGEMENT CONTROLLER AND BASEBOARD MANAGEMENT CONTROLLER**

(30) Priority: 26.07.2023 CN 202310923501
(71) Applicant: Suzhou Metabrain Intelligent Technology Co., Ltd., Suzhou, Jiangsu 215000 (CN)
(72) Inventor: LIU, Baoyang, Suzhou, Jiangsu 215000 (CN); CHEN, Chaofan, Suzhou, Jiangsu 215000 (CN); HUANG, Jiaming, Suzhou, Jiangsu 215000 (CN)
(74) Representative: Studio Torta S.p.A.
(86) International application number: PCT/CN2024/089838
(87) International publication number: WO 2025/020602

(57) **Abstract**

Embodiments of the present disclosure relate to the technical field of electronic information. Provided are a system running method of a Baseboard Management Controller (BMC), and a BMC. The method includes: starting up a target operating system on a BMC, wherein the target operating system is configured to manage a target hardware partition among a plurality of hardware partitions divided on a server host system; loading a target hardware interface for the target operating system, wherein the target hardware interface is configured to establish a connection between the target operating system and the target hardware partition; and running the target operating system on the BMC, wherein the target operating system is configured to manage the target hardware partition through the target hardware interface. The present disclosure solves the problem of low applicability of hardware partitions of the server host system, thereby achieving the effect of improving the applicability of the hardware partitions of the server host system.

## Description

### Cross-Reference to Related Application

This disclosure claims priority to Chinese Patent Application No. 202310923501.6 filed to the China National Intellectual Property Administration on July 26, 2023 and entitled "System Running Method of Baseboard Management Controller, and Baseboard Management Controller", the disclosure of which is hereby incorporated by reference in its entirety.

### Technical Field

Embodiments of the present disclosure relate to the technical field of electronic information, and in particular, to a system running method of a Baseboard Management Controller, and a Baseboard Management Controller.

### Background

In recent years, as semiconductor industries and integrated circuit technologies rapidly develop, a processor has become a critical computing unit in the fields such as cloud computing, artificial intelligence, big data, etc. In the server industry, in order to meet the real-time requirements of services, and at the same time to achieve the shared of hardware computing resources and improve a utilization rate of multi-core processors, the current technology performs hardware partitioning on the computing resources such as a Central Processing Unit (CPU) of a host system, etc. A server is partitioned into two or even more physical host systems, which individually bear services and provide the services. However, in order to cope with hardware partitions of the host system, the same hardware partition design is required to upgrade an architecture of the CPU of a BMC chip, so as to adapt to a corresponding host system hardware partition architecture, and one-to-one development is required, which not only improves the design complexity, causing the cost of the BMC chip to be increased dramatically, but also greatly reduces the applicability of the hardware partitions of the server host system.

In view of the problem of low applicability of hardware partitions of a server host system in the related art, no effective solutions have been proposed.

### Summary

Embodiments of the present disclosure provide a system running method of a Baseboard Management Controller(BMC), and a Baseboard Management Controller, so as to at least solve the problem of low applicability of hardware partitions of a server host system in the related art.

A first aspect provides a system running method of a BMC. The method includes the following operations.

A target operating system is started up on a BMC, wherein the target operating system is configured to manage a target hardware partition among a plurality of hardware partitions divided on a server host system.

A target hardware interface is loaded for the target operating system, wherein the target hardware interface is configured to establish a connection between the target operating system and the target hardware partition.

The target operating system is run on the BMC, wherein the target operating system is configured to manage the target hardware partition through the target hardware interface.

In some embodiments, loading the target hardware interface for the target operating system includes the following operations.

The target hardware interface corresponding to a target processor core used by the target operating system is found from processor cores and hardware interfaces having a correspondence relationship, where the hardware interfaces on the BMC are allocated to each group of processor cores according to hardware architectures of the hardware partitions corresponding to each group of processor cores, so as to obtain the processor cores and the hardware interfaces having the correspondence relationship.

The target hardware interface is loaded for the target operating system on the target processor core.

In some embodiments, loading the target hardware interface for the target operating system on the target processor core includes the following operations.

A target device tree of the target processor core is analyzed to obtain the target hardware interface, where the hardware interfaces on the BMC are allocated to each group of processor cores to obtain the processor cores and the hardware interfaces having the correspondence relationship, and physical addresses of the hardware interfaces on the BMC use a unified addressing scheme.

A driver of the target hardware interface is loaded on the target processor core.

A file system of the target operating system is booted on the target processor core, so as to complete bootstrapping process of the target operating system.

In some embodiments, before loading the target hardware interface for the target operating system, the method further includes the following operations.

The plurality of hardware partitions of a host system are acquired.

The processor cores on the BMC are allocated for each target hardware partition among the plurality of hardware partitions to obtain the target processor cores, and the hardware interfaces on the BMC are allocated for each target hardware partition to obtain the target hardware interfaces, where the target processor core at least meets a management running requirement of the target hardware partition, and the target hardware interface at least meets a hardware connection requirement of the target hardware partition.

A correspondence relationship between the target processor core and the target hardware interface is established, so as to obtain the processor cores and the hardware interfaces having the correspondence relationship.

In some embodiments, allocating the processor cores on the BMC for each target hardware partition among the plurality of hardware partitions to obtain the target processor cores includes at least one of the following.

The processor cores on the BMC are evenly allocated to each target hardware partition.

One or more processor cores on the BMC are allocated for the target hardware partition according to a running architecture of each target hardware partition among the plurality of hardware partitions, so as to obtain the target processor cores.

In some embodiments, allocating the hardware interfaces on the BMC for each target hardware partition to obtain the target hardware interfaces includes at least one of the following.

When there is a first type of hardware interfaces on the BMC that has a number of resources greater than or equal to a number of resources required in the plurality of hardware partitions, the first type of hardware interfaces is allocated, according to the hardware architecture of each target hardware partition, to the target hardware partition as target exclusive interfaces in the target hardware interfaces, where the target exclusive interface is designed as a hardware interface that is only allowed to be accessed by the target processor core.

When there is a second type of hardware interfaces on the BMC that has a number of resources less than a number of the resources required in the plurality of hardware partitions, a shared relationship between the target processor core and a reference processor core in a plurality of groups of processor cores on the BMC with respect to the second type of hardware interfaces is establishes as a target shared interface in the target hardware interfaces, where the target shared interface is designed as a hardware interface that is allowed to be accessed by the target processor core and the reference processor core in the plurality of groups of processor cores.

In some embodiments, running the target operating system on the BMC includes the following operations.

When the target operating system has a requirement to access the target shared interface in the target hardware interface, a first interrupt request is sent by the target operating system to the reference processor core in the plurality of groups of processor cores on the BMC, where the target shared interface is designed as the hardware interface that is allowed to be accessed by the target processor core and the reference processor core used by the target operating system, and the first interrupt request is used for requesting the use of the target shared interface.

A second interrupt request returned by a reference operating system run on the reference processor core in response to the first interrupt request is received, where the second interrupt request is used for indicating that the target shared interface has been released.

In response to the second interrupt request, the target shared interface is accessed through the target operating system.

In some embodiments, sending, by the target operating system, the first interrupt request to the reference processor core in the plurality of groups of processor cores on the BMC includes the following operations.

Whether the target shared interface has been occupied is determined by the target operating system.

When the target operating system does not occupy the target shared interface, the first interrupt request is sent to the reference processor core by the target operating system.

In some embodiments, after accessing the target shared interface through the target operating system, the method further includes the following operations.

A third interrupt request sent by the reference operating system is received by the target operating system, where the third interrupt request is used for requesting the use of the target shared interface.

Whether the target shared interface is being used is determined by the target operating system.

When the target shared interface is being used, an end of the use of the target shared interface is waited for.

When the target shared interface is not used or the use of the target shared interface is ended, the target shared interface is released.

A fourth interrupt request is sent to the reference operating system by the target operating system, where the fourth interrupt request is used for indicating that the target shared interface has been released.

In some embodiments, starting up the target operating system on the BMC includes the following operations.

A Secondary Program Loader (SPL) is executed on the BMC to load a Universal Boot Loader (Uboot loader).

A kernel of a corresponding target operating system is started up on each group of processor cores by the Uboot loader.

In some embodiments, executing, on the BMC, the SPL to load the Uboot loader includes the following operations.

The BMC is powered on, and one processor core is woken up.

A boot loader in a boot storage is booted to execute on the processor core.

Secure boot verification is performed on the SPL through the boot loader.

When the SPL passes the secure boot verification, the SPL is executed to boot the Uboot loader to execute a code.

A second aspect provides a BMC, including: a target operating system and a target hardware interface.

The target hardware interface is configured to connect the target operating system and a target hardware partition among a plurality of hardware partitions on a server host system.

The target operating system is configured to manage the target hardware partition through the target hardware interface.

In some embodiments, the target hardware interface includes: a target exclusive interface and/or a target shared interface.

The target exclusive interface is designed as a hardware interface that is only allowed to be accessed by a target processor core in which the target operating system is located.

The target shared interface is designed as a hardware interface that is allowed to be accessed by the target processor core and a reference processor core in a plurality of groups of processor cores.

In some embodiments, a target device tree is deployed in the target operating system, the target device tree is configured to load a driver of the target hardware interface, and physical addresses of hardware interfaces on the BMC use a unified addressing scheme.

In some embodiments, the BMC further includes a Uboot loader.

The Uboot loader is configured to start up a kernel of a corresponding target operating system on each group of processor cores on the BMC.

A kernel of the target operating system is configured to analyze the driver of the target hardware interface loaded by the target device tree.

In some embodiments, the BMC further includes a Secondary Program Loader (SPL).

The SPL is configured to boot the Uboot loader to execute a code.

In some embodiments, the BMC further includes a boot storage.

The boot storage is configured to perform secure boot verification on the SPL.

A third aspect provides a server, including a Baseboard Management Controller (BMC) and a server host system.

The BMC includes a target operating system and a target hardware interface, the server host system includes a plurality of hardware partitions, and the target hardware interface establishes a connection between the target operating system and a target hardware partition among the plurality of hardware partitions.

The BMC is configured to manage the target hardware partition through the target operating system.

In some embodiments, the target hardware interface includes: a target exclusive interface and/or a target shared interface.

The target exclusive interface is designed as a hardware interface that is only allowed to be accessed by a target processor core in which the target operating system is located, and the target shared interface is designed as a hardware interface that is allowed to be accessed by the target processor core and a reference processor core in a plurality of groups of processor cores.

The target exclusive interface is directly connected to the target hardware partition.

The target shared interface is connected to a partition switching device, and the partition switching device is separately connected to the target hardware partition and a reference hardware partition corresponding to the reference processor core.

A fourth aspect provides a system running apparatus of a BMC. The system running apparatus includes a startup component, a loading component, and a running component.

The startup component is configured to start up a target operating system on a BMC, where the target operating system is configured to manage a target hardware partition among a plurality of hardware partitions divided on a server host system.

The loading component is configured to load a target hardware interface for the target operating system, where the target hardware interface is configured to establish a connection between the target operating system and the target hardware partition.

The running component is configured to run the target operating system on the BMC, wherein the target operating system is configured to manage the target hardware partition through the target hardware interface.

A fifth aspect further provides a non-volatile readable storage medium. The non-volatile readable storage medium stores a computer program. The computer program is configured to, when being run, steps in any one of the above method embodiments.

A sixth aspect further provides an electronic device, including a memory and a processor. The memory is configured to store a computer program. The processor is configured to run the computer program to execute steps in any one of the above method embodiments.

Through the present disclosure, the plurality of hardware interfaces are arranged on the BMC, and each hardware interface is configured to connect the hardware partition and the operating system corresponding to the hardware partition. When the target operating system runs on the BMC, the target hardware partition among the plurality of hardware partitions divided on the server host system can be managed through the target hardware interface corresponding to the target operating system, that is, by allocating the corresponding hardware interface to each operating system, different operating systems are allowed to manage the hardware partitions corresponding to the operating systems divided on the server host system, such that it is not necessary to modify the system architecture of the BMC according to the architectures of the hardware partitions of different server host systems, and the adaptability and universality of the hardware partitions of the server host system are improved. Therefore, the technical problem of low applicability of hardware partitions of a server host system can be solved, thereby achieving the technical effect of improving the applicability of the hardware partitions of the server host system.

### Brief Description of the Drawings

Fig. 1 is a block diagram of a hardware structure of a mobile terminal of a system running method of a BMC according to embodiments of the present disclosure.
Fig. 2 is a flow diagram of a system running method of a BMC according to embodiments of the present disclosure.
Fig. 3 is a flow diagram of a process of an operating system running in a core partition on a BMC according to embodiments of the present disclosure.
Fig. 4 is a schematic diagram of a system running architecture of a BMC according to embodiments of the present disclosure.
Fig. 5 is a schematic diagram of a process of an operating system on a core partition accessing a target shared interface for an inter-core communication according to embodiments of the present disclosure.
Fig. 6 is a structural block diagram of a BMC according to embodiments of the present disclosure.
Fig. 7 is a structural block diagram of a system running apparatus of a BMC according to embodiments of the present disclosure.
Fig. 8 is a schematic diagram of an electronic device according to embodiments of the present disclosure.

### Detailed Description of the Embodiments

The embodiments of the present disclosure are described below in detail with reference to the drawings and the embodiments.

It is to be noted that terms "first", "second" and the like in the description, claims and the above mentioned drawings of the present disclosure are used for distinguishing similar objects rather than describing a specified sequence or a precedence order.

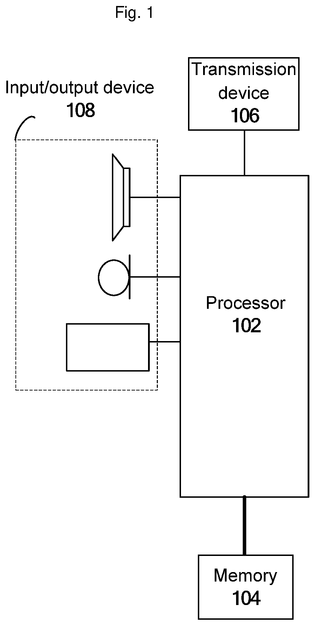

The method embodiments provided in the embodiments of the present disclosure can be executed in a mobile terminal, a computer terminal or a similar computing apparatus. By being operated on the mobile terminal as an embodiment, Fig. 1 is a block diagram of a hardware structure of a mobile terminal of a system running method of a BMC according to embodiments of the present disclosure. As shown in Fig. 1, the mobile terminal can include one or more (only one is shown in Fig. 1) processors 102 (the processor 102 can include, but is not limited to, a processing apparatus such as a microprocessor MCU or a programmable logic device FPGA) and a memory 104 configured to store data. The above mobile terminal can further include a transmission device 106 configured to achieve a communication function, and an input/output device 108. Those skilled in the art can understand that the structure shown in Fig. 1 is only a schematic diagram, which does not limit the structure of the above mobile terminal. For example, the mobile terminal can also include more or less components than those shown in Fig. 1, or have a different configuration from that shown in Fig. 1.

The memory 104 can be configured to store a computer program, for example, a software program and a component of application software, such as a computer program corresponding to a system running method of a BMC in the embodiments of the present disclosure. The processor 102 runs the computer program stored in the memory 104, so as to execute various functional applications and data processing, that is, to realize the above method. The memory 104 can include a high-speed random access memory, and can further include a non-volatile memory, such as one or more magnetic disk memory apparatuses, a flash memory device, or other non-volatile solid-state memory devices. In some embodiments, the memory 104 can include memories remotely disposed relative to the processor 102, and these remote memories can be connected to the mobile terminal via a network. Embodiments of the above network include, but are not limited to, the Internet, an intranet, a local area network, a mobile communication network, and a combination thereof.

The transmission device 106 is configured to receive or send data via the network. The optional embodiment of the above network can include a wireless network provided by a communication provider of the mobile terminal. In an embodiment, the transmission device 106 includes a Network Interface Controller (NIC), and can be connected to other network devices by using a base station, so as to communicate with the Internet. In an embodiment, the transmission device 106 is a Radio Frequency (RF) component, which is configured to communicate with the Internet in a wireless manner.

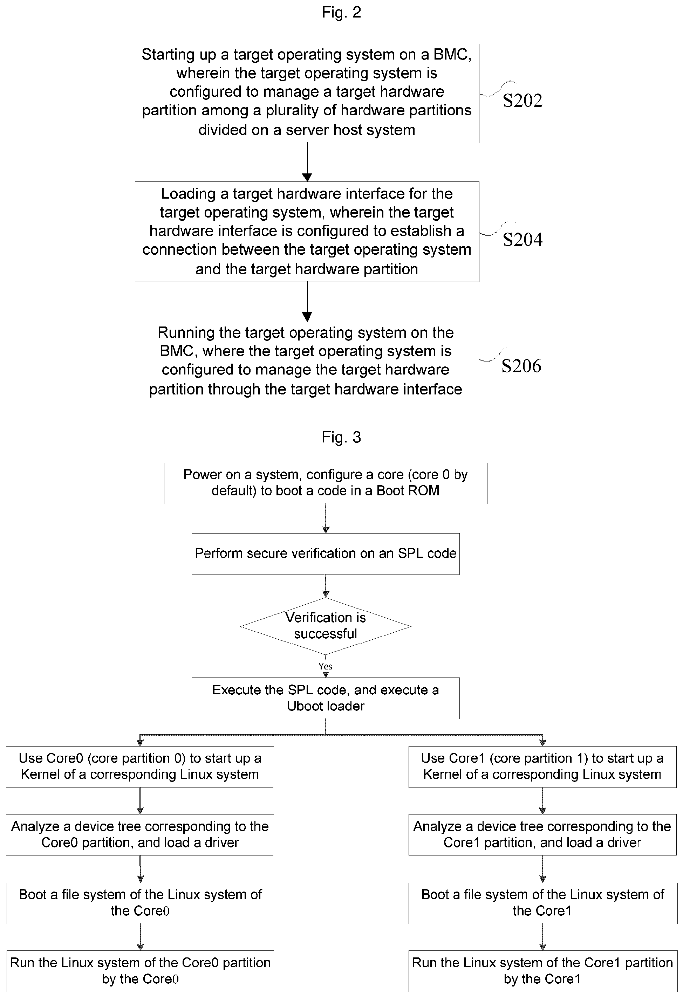

This embodiment provides a system running method of a BMC. The method is applied to the processor. Fig. 2 is a flow diagram of a system running method of a BMC according to embodiments of the present disclosure. As shown in Fig. 2, the flow includes the following steps.

At S202, a target operating system is started up on a BMC, where the target operating system is configured to manage a target hardware partition among a plurality of hardware partitions divided on a server host system.

At S204, a target hardware interface is loaded for the target operating system, where the target hardware interface is configured to establish a connection between the target operating system and the target hardware partition.

At S206, the target operating system is run on the BMC, where the target operating system is configured to manage the target hardware partition through the target hardware interface.

Through the above steps, the plurality of hardware interfaces are arranged on the BMC, and each hardware interface is configured to connect the hardware partition and the operating system corresponding to the hardware partition. When the target operating system runs on the BMC, the target hardware partition among the plurality of hardware partitions divided on the server host system can be managed through the target hardware interface corresponding to the target operating system, that is, by allocating the corresponding hardware interface to each operating system, different operating systems are allowed to manage the hardware partitions corresponding to the operating systems divided on the server host system, such that it is not necessary to modify the system architecture of the BMC according to the architectures of the hardware partitions of different server host systems, such that the adaptability and universality of the hardware partitions of the server host system are improved. Therefore, the technical problem of low applicability of hardware partitions of a server host system can be solved, thereby achieving the technical effect of improving the applicability of the hardware partitions of the server host system.

In some embodiments, the BMC can be, but is not limited to, a dedicated controller that provides intelligent management to a mainboard and is configured to monitor and manage a server based on Intelligent Platform Management Interface (IPMI) technical design specifications, such as a BMC. In some embodiments, the BMC can be provided with an independent arithmetic unit, then a controller, a memory, and an input/output device, in some embodiments, the BMC can also have an independent software system, which includes a basic startup system, an operating system, and various application programs run on the BMC system. On the mainboard, in some embodiments, the BMC can be an independent insertion component, in some embodiments, the BMC can also be designed as a component integrated on the mainboard, which is often designed on a server or a mainboard of a computer.

In the technical solution provided in S202, the target operating system can be, but is not limited to, any operating system running on the BMC, and can be any operating system among a plurality of operating systems deployed on a processor of an embedded system, which is an embedded operating system. The embedded operating system can be classified into a Real-Time Operating System (RTOS) and a non-RTOS according to the degree of sensitivity to the response time. The RTOS can include, but is not limited to, a Free Real-Time Operating System (Free RTOS) and a Real-Time Linux (RT Linux). The non-RTOS can include, but is not limited to, a Contiki Operating System (a small multi-task operating system), a HeliOS Operating System (HeliOS, a lightweight high-performance operating system), a Linux (GNU/Linux, a POSIX-based multi-user and multi-task operating system supporting multi-threads and multi-CPUs), etc.

In some embodiments, the plurality of operating systems can be, but are not limited to, a plurality of heterogeneous or isomorphic operating systems configured to manage the BMC, that is, the type of each operating system can be the same or different.

In some embodiments, the embedded system is configured to control, monitor or assist in operation of apparatus such as machines and devices, and is a dedicated computer system. The embedded system is the dedicated computer system that is centered on applications, is based on a computer technology, is customizable in software and hardware, and adapts to strict requirements of application systems in terms of functions, reliability, costs, sizes, and power consumption. Defined in terms of an application object, the embedded system is an integration of software and hardware, and can also cover accessory apparatuses such as machines.

In some embodiments, from a hardware perspective, the embedded system can include, but is not limited to, hardware devices such as a processor, a memory, and a peripheral circuit. The target operating system can, but is not limited to, run on the basis of the processor of the embedded system. From a software perspective, the embedded system can include, but is not limited to, an base-level drive, an operating system, an application program, and the like. The target operating systems are the operating systems in the embedded system.

In some embodiments, the server host system can be, but is not limited to, an operating system that carries a plurality of CPUs and is installed on a computer host, which is generally a system such as Windows, Mac, Operating System (OS), etc. The systems manage hardware and software resources of the computer, and provide services and interfaces for users or application programs to use.

In some embodiments, partitioning can be, but is not limited to, performed on hardware resources of the server host system by using the CPU as a partitioning unit, so as to obtain the plurality of hardware partitions. Each hardware partition among the plurality of hardware partitions corresponds to one independent operating system, that is, each hardware partition includes its own hardware resources such as computing, storage, network, Input/Output (I/O), etc. required for system running.

In some embodiments, at the level of software, each hardware partition can run different operating systems or different versions of the same operating system, and can be configured to manage the corresponding operating system of each hardware partition run independently of each other.

In some embodiments, the target operating system can be, but is not limited to, started up on the BMC by using the following manners: an Secondary Program Loader (SPL) is executed on the BMC to load a Uboot loader; and a kernel of the corresponding target operating system is started up on each group of processor cores by the Universal Boot Loader (Uboot loader).

In some embodiments, the SPL can be, but is not limited to, a program loader compiling an SPL code, which is mainly responsible for initializing an external Random Access Memory (RAM) and an environment, and loading a Uboot loader (which is configured to complete hardware device initialization and operating system code transport) to be mirrored into the RAM for execution.

In some embodiments, the Uboot loader can be, but is not limited to, a boot loader that can starts up an operating system kernel and can deploy and load the entire computer system, such as a Uboot loader.

In some embodiments, the SPL can be, but is not limited to, executed on the BMC to load the Uboot loader by using the following manners: the BMC is powered on, and one processor core is woken up; a boot loader in a boot memory is booted to execute on the processor core; secure boot verification is performed on the SPL through the boot loader; and when the SPL passes the secure boot verification, the SPL is executed to boot the Uboot loader to execute a code.

In some embodiments, the boot loader of the target operating system can be, but is not limited to, stored in a specific storage space on the BMC, and is particularly configured to start up the target operating system. One processor core of the target operating system can be, but is not limited to, configured to execute the boot loader of the target operating system; and the target operating system can be, but is not limited to, started up by executing the boot loader of the target operating system.

In some embodiments, the process of performing secure boot verification on the code of the SPL by the boot loader can include, but is not limited to: the boot loader reads the code of the SPL and a verification code, an operation is performed on the code of the SPL through an agreed-upon calculation method (e.g., Hashing operation), so as to obtain an calculated value, and then the calculated value is compared with the read verification code, if the calculated value is consistent with the verification code, a checking result is normal; and if the calculated value is inconsistent with the verification code, the checking result is abnormal.

In some embodiments, the SPL can also perform secure boot verification on a code of the Uboot loader; the SPL reads the code of the Uboot loader and a verification code; an operation is performed on the code of the Uboot loader by an agreed-upon calculation method (e.g., Hashing operation, which can be the same or different from the calculation method of the boot memory to check the SPL), so as to obtain an calculated value; and then the calculated value is compared with the read verification code, if the calculated value is consistent with the verification code, a checking result is normal; and if the calculated value is inconsistent with the verification code, the checking result is abnormal. When the checking result is normal, the target operating system is loaded by the Uboot loader.

In some embodiments, the boot memory can be, but is not limited to, a Boot ROM, and the Boot ROM is a small mask ROM or a write-protect flash memory in an embedded processor, including a first piece of the code executed when the processor is powered on or reset.

In some embodiments, for example, the target operating system is used as a Linux system for description. First, a BMC management system (BMC) is powered on, the BMC wakes up one core (core 0 by default) to boot the boot loader in the Boot ROM (boot memory); then, secure boot verification is performed on partial code of the SPL through the boot loader in the Boot ROM, and if the verification is passed, the Uboot loader is booted to execute the SPL code and the Uboot loader code; and finally, a kernel of the Linux system is started up on the core 0 through the Uboot loader.

In the technical solution provided in S204, the target hardware interface is an interface that has a function of managing the host system. For example, the target hardware interface is one hardware interface resource or more hardware interface resources strongly related to the BMC system. The target hardware interface can include, but is not limited to, hardware interface resources such as a Low pin count Bus (LPC), Inter-Integrated Circuit (I2C) 0 to I2C5, a Local Area Network (LAN) 0, LAN1, Peripheral Component Interconnect Express (PCIE), etc.

In some embodiments, the target hardware interface can be, but is not limited to, deployed on the BMC. The hardware interfaces required for management of the hardware partitions by the operating system can be loaded on the processor in advance, so as to support the calling of the hardware interfaces during subsequent management of the operating system. After the target operating system is started up, the target hardware interface can be loaded for the target operating system on the BMC processor operated by the target operating system, so as to establish a connection between the target operating system and the target hardware partition, such that the target operating system manages various hardware resources in the target hardware partition.

In some embodiments, the target hardware interface can be, but is not limited to, loaded for the target operating system through the following manners: the target hardware interface corresponding to a target processor core used by the target operating system is found from processor cores and hardware interfaces having a correspondence relationship, wherein the hardware interfaces on the BMC are allocated to each group of processor cores according to hardware architectures of the hardware partitions corresponding to each group of processor cores, so as to obtain the processor cores and the hardware interfaces having the correspondence relationship; and the target hardware interface is loaded for the target operating system on the target processor core.

In some embodiments, the BMC can include, but is not limited to, a plurality of processor cores, and the BMC can be divided into a plurality of core partitions by using the processor core, which is the CPU core, as a partitioning unit.

In some embodiments, if the BMC includes two processor cores: a core 0 and a core 1, and four hardware interfaces are deployed on the BMC: a hardware interface 1, a hardware interface 2, a hardware interface 3, and a hardware interface 4, the hardware interface 1 and the hardware interface 2 are allocated to the core 0 according to a hardware architecture of the hardware partition corresponding to the core 0 (processor core), that is, the hardware interface 1 and the hardware interface 2 correspond to the core 0; and the hardware interface 3 and the hardware interface 4 are allocated to the core 1 according to a hardware architecture of the hardware partition corresponding to the core 1, that is, the hardware interface 3 and the hardware interface 4 correspond to the core 1. Then, when the processor used by the target operating system is the core 0 (target processor core), the hardware interface 1 and the hardware interface 2 can be found as the target hardware interfaces, such that the target hardware interfaces are loaded for the target operating system on the core 0.

In some embodiments, the target hardware interface can be, but is not limited to, loaded for the target operating system on the target processor core through the following manners: a target device tree of the target processor core is analyzed to obtain the target hardware interface, wherein the hardware interfaces on the BMC are allocated to each group of processor cores to obtain the processor cores and the hardware interfaces having the correspondence relationship, and physical addresses of the hardware interfaces on the BMC use a unified addressing scheme; a driver of the target hardware interface is loaded on the target processor core; and a file system of the target operating system is booted on the target processor core, so as to complete startup boot of the target operating system.

In some embodiments, each group of processor cores corresponds to one device tree, and the device tree corresponding to the target processor core is a target device tree. The device tree can be, but is not limited to, a Linux device tree driver, which is configured to provide hardware information for the operating system. The device tree driver is loaded during startup of a Linux kernel, such that the system can identify and manage a hardware device. The device tree driver provides the address, interrupt, power supply, and other attributes of the hardware device, so as to assist the operating system to correctly find, identify, and control the hardware device. The device tree is generally described by a file called a Device Tree Source (DTS). This file includes the information and attributes of the hardware device, such as the model, manufacturer, I/O address range, interrupt controller, pin, etc. of a device. When the system is started up, the DTS file is compiled into a binary file (DTB), and is loaded and analyzed by the Linux kernel.

In some embodiments, different hardware resources can be, but are not limited to, allocated to different processor cores corresponding to different device tree files through different device tree files, that is, the hardware interfaces on the BMC are allocated to corresponding different processor cores through different device tree files, thereby obtaining the processor cores and the hardware interfaces having the correspondence relationship.

In some embodiments, the physical addresses of the hardware interfaces on the BMC use the unified addressing scheme, that is, resources such as LPCO, LPC1, I2C0-I2C5, LAN0, LAN1, PCIE, etc. have mutually-exclusive address spaces in the BMC system. In this way, as long as the device tree files of different core partitions on the BMC ensure that the hardware resources defined are different, it can ensure that other core partitions are not affected when each core partition performs hardware resource access.

In an optional implementation, for example, the target operating system is the Linux system, and the BMC is mounted with two processor cores, which are divided into two core partitions: a Core0 partition and a Core1 partition. An embodiment of a process of an operating system running in a core partition on a BMC is provided. Fig. 3 is a flow diagram of a process of an operating system running in a core partition on a BMC according to embodiments of the present disclosure. As shown in Fig. 3, the flow includes the following steps.

At S1, the BMC management system is powered on, the BMC uses one of the cores (core 0 by default) to boot the boot loader in the Boot ROM; at S2, the Boot ROM performs secure boot verification on partial code of the SPL, and if the verification is passed, the SPL code is executed, and the Uboot code is executed; at S3, the Core0 is used to start up the kernel of the Linux system, analyze the device tree corresponding to the Core0 partition and load the corresponding driver, so as to boot the file system, thereby completing the booting of the Linux system; and in this case, on the one hand, the Core0 completely owns an access permission of exclusive resources LPCO, I2C0-I2C2, and LAN0, and thus can independently use these interfaces according to an upper-layer application requirement, and on the other hand, the Core0 completes the loading of a driver of a shared resource PCIE interface controller, and thus has the capability to access the PCIE interface for upper-layer applications; at S4, the Core1 is used to start up the kernel of the Linux system, analyze the device tree corresponding to the Core1 partition and load the corresponding driver, so as to boot the file system, thereby completing the booting of the Linux system; and in this case, the Core1 completely owns an access permission of exclusive resources LPC1, I2C3-I2C5, and LAN1, and thus can independently use these interfaces according to the upper-layer application requirement, and on the other hand, the Core1 completes the loading of the driver of the shared resource PCIE interface controller, and thus has the capability to access the PCIE interface for upper-layer applications; and at S5, the Core0 independently runs the Linux system of the Core0 partition, and the Core1 independently runs the Linux system of the Core1 partition.

In some embodiments, before loading the target hardware interface for the target operating system, the system running method of a BMC can be, but is not limited to, implemented through the following manners: the plurality of hardware partitions of the host system are acquired; the processor cores on the BMC are allocated for each target hardware partition among the plurality of hardware partitions to obtain the target processor cores, and the hardware interfaces on the BMC are allocated for each target hardware partition to obtain the target hardware interfaces, where the target processor core at least meets a management running requirement of the target hardware partition, and the target hardware interface at least meets a hardware connection requirement of the target hardware partition; and a correspondence relationship between the target processor core and the target hardware interface is established, so as to obtain the processor cores and the hardware interfaces having the correspondence relationship.

In some embodiments, if N core partitions are divided according to the number N of the processor cores mounted on the BMC, that the host system has M hardware partitions is acquired, and then a correspondence relationship between the M hardware partitions and the N core partitions can be established, such that target processor cores that meet a management running requirement of the target hardware partition are allocated for the target hardware partition among the M hardware partitions, and the target hardware interfaces that meet a hardware connection requirement of the target hardware partition are allocated for the target hardware partition.

In some embodiments, the hardware interfaces on the BMC can be, but are not limited to, allocated to corresponding different processor cores through different device tree files to establish the correspondence relationship between the target processor core and the target hardware interface, so as to obtain the processor cores and the hardware interfaces having the correspondence relationship.

In some embodiments, the processor cores on the BMC can be, but are not limited to, allocated for each target hardware partition among the plurality of hardware partitions to obtain the target processor cores through one of the following manners: the processor cores on the BMC are evenly allocated to each target hardware partition; and one or more processor cores on the BMC are allocated for the target hardware partition according to a running architecture of each target hardware partition among the plurality of hardware partitions, so as to obtain the target processor cores.

In some embodiments, if N core partitions are divided according to the number N of the processor cores mounted on the BMC, that the host system has M hardware partitions is acquired, and then the target processor cores can be allocated for the target hardware partition by using one of the following two allocation methods: 1, n processor cores corresponding to the N core partitions are evenly allocated to m target hardware partitions corresponding to the M hardware partitions. 2, one processor core or more processor cores of the n processor cores on the BMC are allocated for the m target hardware partitions according to a running architecture of each target hardware partition among the M hardware partitions.

In some embodiments, if the method of allocating the target processor core for the target hardware partition according to the running architecture is used, the following two preferred allocation strategies can be used: 1, a CPU is preferred, indicating that one processor core or more processor cores that meet or are closest to the number of CPU cores required for the running of the target hardware partition are allocated for the target hardware partition. 2, a memory is preferred, indicating that one processor core or more processor cores that meet or are closest to a memory bandwidth required for the running of the target hardware partition are allocated for the target hardware partition.

In some embodiments, the hardware interfaces on the BMC can be, but are not limited to, allocated for each target hardware partition to obtain the target hardware interfaces through one of the following manners: when there is a first type of hardware interfaces on the BMC that has a number of resources greater than or equal to a number of resources required in the plurality of hardware partitions, the first type of hardware interfaces is allocated, according to the hardware architecture of each target hardware partition, to the target hardware partition as target exclusive interfaces in the target hardware interfaces, where the target exclusive interface is designed as a hardware interface that is only allowed to be accessed by the target processor core; and when there is a second type of hardware interfaces on the BMC that has a number of resources less than a number of resources required in the plurality of hardware interfaces, a shared relationship between the target processor core and a reference processor core in the plurality of groups of processor cores on the BMC with respect to the second type of hardware interfaces is establishes as a target shared interface in the target hardware interfaces, where the target shared interface is designed as a hardware interface that is allowed to be accessed by the target processor core and the reference processor core in the plurality of groups of processor cores.

In some embodiments, the reference processor core can be, but is not limited to, CPU cores of one processor or more processors among the plurality of groups of processors other than a target processor. The target shared interface and the target exclusive interface can be, but are not limited to, use a unified addressing form in the BMC management system, and the plurality of processor cores all have access permissions to the target shared interface.

In some embodiments, the hardware resources deployed on the BMC can be, but are not limited to, two types: a shared resource and an exclusive resource. The exclusive resource can include, but is not limited to, hardware interface resources such as LPC0, LPC1, I2C0-I2C5, LAN0, LAN1, etc. These resources are exclusive resources of the core partition in which the resources are located, and can only be accessed by the target operating system corresponding to the current core partition. The shared resource can include, but is not limited to, a PCIE interface resource. The shared resource is a shared resource of all core partitions on the BMC, that is, the operating systems corresponding to all the core partitions all have a permission to access the shared resource, such that a certain mechanism can be designed to ensure time-sharing access of different core partitions to the shared resource.

In some embodiments, that is to say, if the number of the first types of hardware interfaces on the BMC is N, and if the number of resources owned by N first types of hardware interfaces is greater than or equal to the number of resources required in the plurality of hardware partitions, it indicates that resources required for the loading of the plurality of hardware partitions can all be provided by the N first types of hardware interfaces. In this case, the first type of hardware interfaces can be allocated, as a target exclusive resource, to the target hardware partition according to the hardware architecture of each target hardware partition, and the target exclusive resource can be used to independently run the target operating system.

In some embodiments, that is to say, if the number of the second types of hardware interfaces on the BMC is M, and if the number of resources owned by the M second types of hardware interfaces is less than the number of resources required in the plurality of hardware partitions, it indicates that the M second types of hardware interfaces cannot be evenly allocated to the plurality of hardware partitions to ensure that the hardware resource of each hardware partition meets a resource requirement. In this case, the shared relationship in which the target processor core and the reference processor core both can access the second type of hardware interfaces can be established, and the second type of hardware interfaces are used as the target shared resource, so as to allow time-sharing access to the plurality of processor cores.

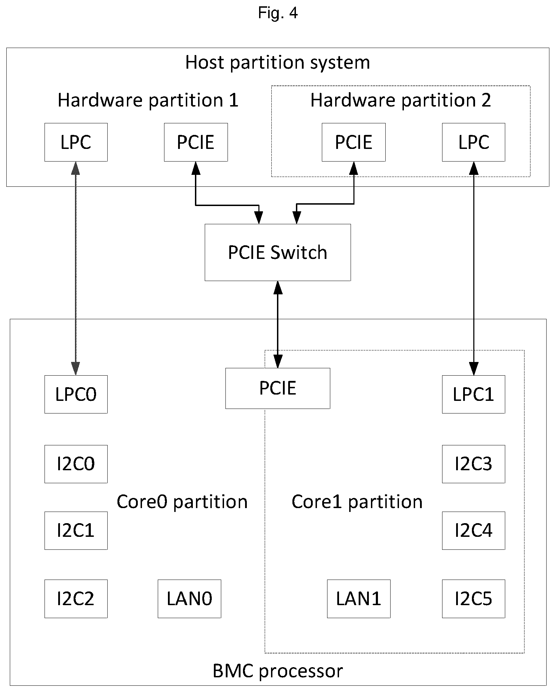

In an optional implementation, for example, the server host system is divided into two hardware partitions: a hardware partition 1 and a hardware partition 2, and two processor cores mounted on the BMC are divided into two core partitions: a Core0 partition and a Core1 partition. An embodiment of a system running architecture of a BMC is provided. Fig. 4 is a schematic diagram of a system running architecture of a BMC according to embodiments of the present disclosure. As shown in Fig. 4, for a server Host system, a Host hardware resource is partitioned by using a CPU as a partitioning unit, respectively corresponding to the hardware partition 1 and the hardware partition 2 in Fig. 4. The two partitions respectively correspond to one independent processor system, that is, each partition includes its own hardware resources such as computing, storage, network, I/O, etc. required for system running. For ease of subsequent description of system structures of the hardware partitions of the BMC, LPC and PCIE hardware interface resources strongly related to the BMC system are shown only in Fig. 4, that is, assuming that the hardware partition 1 have 1 LPC and 1 PCIE interface, and the hardware partition 2 have 1 LPC and 1 PCIE interface. At the level of software, the hardware partition 1 and the hardware partition 2 can respectively run different operating systems or different versions of the same operating system, and the two partition systems run independently of each other.

For the BMC processor system, a hardware resource of the BMC processor system are partitioned by using a CPU core as a partitioning unit, respectively corresponding to the Core0 partition and the Core1 partition in Fig. 4. Likewise, for ease of description, partial hardware resource of the BMC is shown only in Fig. 4, that is, LPC, I2C, LAN, and PCIE interface resources. From Fig. 4, it can be learned that, the Core0 partition of the BMC management includes one LPC interface (corresponding to LPC0 in Fig. 4), three I2C interfaces (corresponding to I2C0-I2C2 in Fig. 4), and one network interface (corresponding to LAN0 in Fig. 4); and similarly, the Core1 partition includes one LPC interface (corresponding to LPC1 in Fig. 4), three I2C interfaces (corresponding to I2C3-I2C5 in Fig. 4), and one network interface (corresponding to LAN1 in Fig. 4). At the level of software, the two partitions can respectively run different operating systems or different versions of the same operating system, and the two partition systems run independently of each other.

In some embodiments, for the partition shared resources PCIE of the BMC, in order to realize information interaction with a Host partition system, an independent PCIE Switch device can be designed between the BMC and the Host partition system, the Linux systems of the two partitions of the BMC control a gate passageway of the PCIE Switch through negotiation of inter-core communication, so as to realize the purpose of achieving a mutual connection between the two partition systems of the BMC and the Host partition system through the partition shared resources.

In the technical solution provided in S206, the Linux operating system (target operating system) can run on the BMC management system (BMC). The Linux operating system manages the target hardware partition through the target hardware interface connected to the Linux operating system and the corresponding target hardware partition, such that it is not necessary to upgrade a BMC architecture according to an architecture of a host hardware partition, and an increase in chip costs due to the upgrading of the architecture of the BMC processor is avoided, thereby reducing the design cost of a future server system, and achieving the objective of significantly reducing the design cost and improving the computing performance of the host system and the BMC system.

In some embodiments, the target operating system can, but is not limited to, run on the BMC through the following manners: when the target operating system has a requirement to access a target shared interface in the target hardware interface, a first interrupt request is sent by the target operating system to a reference processor core in a plurality of groups of processor cores on the BMC, where the target shared interface is designed as a hardware interface that is allowed to be accessed by the target processor core and the reference processor core used by the target operating system, and the first interrupt request is used for requesting the use of the target shared interface; a second interrupt request returned by a reference operating system run on the reference processor core in response to the first interrupt request is received, where the second interrupt request is used for indicating that the target shared interface has been released; and in response to the second interrupt request, the target shared interface is accessed through the target operating system.

In some embodiments, the reference operating system can be, but is not limited to, one operating system or more operating systems among the plurality of operating systems running on the BMC other than the target operating system.

In some embodiments, after receiving the first interrupt request that requests the use of the target shared interface, the reference operating system returns the second interrupt request which is obtained in response to the first interrupt request and indicates that the target shared interface has been released to the target operating system, thereby completing an access action of the target operating system to the target shared interface.

In some embodiments, the target operating system can be, but is not limited to, send the first interrupt request to the reference operating system according to the self service requirements by means of inter-core communication, so as to access the target shared interface, and the reference operating system indicates the releasing of the target shared interface by means of inter-core communication and returns a releasing result to the target operating system through the second interrupt request, thereby implementing the accessing of the target operating system to the target shared interface. Therefore, all the plurality of systems have access capability to the target shared interface without causing conflicts.

In some embodiments, all the plurality of processor cores have an access permission to the target shared interface. Then, when the plurality of processor cores access the target shared interface in the system at the same time, it must result in an access conflict, triggering a system error. Therefore, a particular access mechanism needs to be designed for the target shared interface to ensure correct access to the target shared interface by different partitions.

In some embodiments, the interrupt request can be, but is not limited to, interacted between the target operating system and the reference operating system by means of inter-core communication. The inter-core communication mode can be implemented by defining an interrupt vector.

In some embodiments, a customized interrupt vector is used in the present disclosure to implement inter-core communication, so as to realize exclusive access control of the partition shared resources. For example, the target operating system and the reference operating system both are the Linux systems, the BMC is mounted with two processor cores, which are divided into two core partitions: the Core0 partition and the Core1 partition. The Linux system totally has 16 Software Generated Interrupt (SGI) numbers to implement inter-core communication, wherein 8-15 interrupt numbers can be defined by a user. Table 1 is a configuration solution of an inter-core interrupt vector based on the Linux system.

**Table 1**

| Serial number | Interrupt number | Trigger source | Response source | Meaning |
|---|---|---|---|---|
| 1 | 8 | Core0 | Core1 | Core0 partition requests use of PCIE resource |
| 2 | 9 | Core1 | Core0 | Core1 partition requests use of PCIE resource |
| 3 | 10 | Core1 | Core0 | Core1 partition releases PCIE resource |
| 4 | 11 | Core0 | Core1 | Core0 partition releases PCTE resource |

From Table 1, it can be learned that, when the interrupt number is defined as 8, the trigger source is the Core0, and the response source is the Core1, meaning that the Core0 partition requests the use of the PCIE resource; when the interrupt number is defined as 9, the trigger source is the Core1, and the response source is the Core0, meaning that the Core1 partition requests the use of the PCIE resource; when the interrupt number is defined as 10, the trigger source is the Core1, and the response source is the Core0, meaning that the Core1 partition releases the PCIE resource; when the interrupt number is defined as 11, the trigger source is the Core0, and the response source is the Core1, meaning that the Core0 partition releases the PCIE resource.

In some embodiments, the first interrupt request can be, but is not limited to, sent by the target operating system to the reference processor core in the plurality of groups of processor cores on the BMC through the following manners: whether the target shared interface has been occupied is determined by the target operating system; and when the target operating system does not occupy the target shared interface, the first interrupt request is sent to the reference processor core by the target operating system.

In some embodiments, whether the target operating system has occupied the target shared interface is determined by determining a use situation of the current hardware resource of the target operating system. For example, the PCIE hardware interface is the target shared interface. If the target operating system is currently using the PCIE hardware resource, it can be determined that the target operating system has occupied the target shared interface, and in this case, the first interrupt request does not need to be sent to the reference processor core by the target operating system; and if the target operating system is not using the PCIE hardware resource currently, it can be determined that the target operating system does not occupy the target shared interface, and in this case, the first interrupt request needs to be sent to the reference processor core by the target operating system.

In some embodiments, when the target operating system does not occupy the target shared interface, the interrupt number requesting to occupy the target shared interface can be, but is not limited to, found from an inter-core interrupt vector configuration solution in the embodiments of the present disclosure according to the core of the target operating system, so as to send the first interrupt request to the reference processor core, thereby implementing the interaction of the interrupt requests by means of inter-core communication.

In some embodiments, after accessing the target shared interface through the target operating system, system running method of a BMC can be, but is not limited to, implemented through the following manners: a third interrupt request sent by the reference operating system is received by the target operating system, where the third interrupt request is used for requesting the use of the target shared interface; whether the target shared interface is being used is determined by the target operating system; when the target shared interface is being used, the end of the use of the target shared interface is waited for; when the target shared interface is not used or the use of the target shared interface is ended, the target shared interface is released; and a fourth interrupt request is sent to the reference operating system by the target operating system, where the fourth interrupt request is used for indicating that the target shared interface has been released.

In some embodiments, after the target operating system receives the third interrupt request that is sent by the reference system and requests the use of the target shared interface, whether the target operating system has occupied the target shared interface is determined by determining a use situation of the current hardware resource of the target operating system. For example, the PCIE hardware interface is the target shared interface. If the target operating system is currently using the PCIE hardware resource, it can be determined that the target operating system has occupied the target shared interface, and in this case, the end of the use of the PCIE hardware interface needs to be waited for, and at the end of the use, the target operating system releases the PCIE hardware interface; and if the target operating system is not using the PCIE hardware resource currently, it can be determined that the target operating system does not occupy the target shared interface, and the target operating system releases the PCIE hardware interface.

In some embodiments, when the target operating system does not occupy the target shared interface or the target system occupies the target shared interface but has already used the target shared interface, the interrupt number indicating that the target shared interface has been released can be, but is not limited to, found from the inter-core interrupt vector configuration solution in the embodiments of the present disclosure according to the core of the target operating system, so as to send the fourth interrupt request to the reference processor core, thereby informing the processor core of the reference operating system requiring to use the target shared interface that the target shared interface is available current, and thus implementing the interaction of the interrupt requests by means of inter-core communication.

In some embodiments, each interrupt request is transmitted between the systems by means of software protocols, in some embodiments, each interrupt request is also transmitted by means of hardware components, but it is not limited to this way.

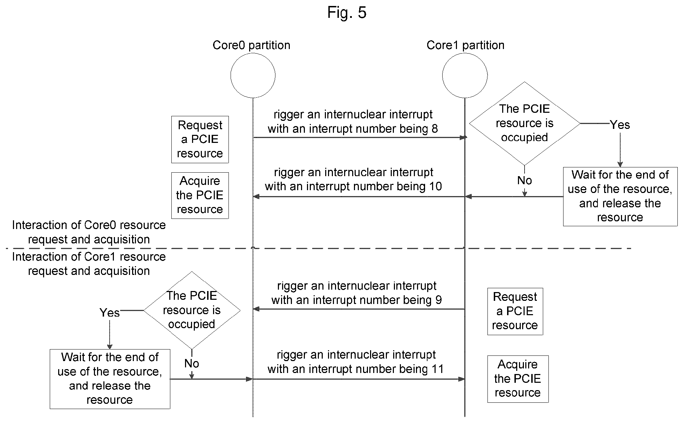

In an optional implementation, for example, the target operating system and the reference operating system both are the Linux systems, and the BMC is mounted with two processor cores, which are divided into two core partitions: a Core0 partition and a Core1 partition. An embodiment of an operating system on a core partition accessing a target shared interface for inter-core communication is provided. Fig. 5 is a schematic diagram of a process of an operating system on a core partition accessing a target shared interface for an inter-core communication according to embodiments of the present disclosure. As shown in Fig. 5, when the Core0 partition needs to access the PCIE shared resource, the Linux system of the Core0 partition triggers an inter-core interrupt with the interrupt number being 8, and the Linux system of the Core1 partition detects the interrupt and then determines whether the PCIE resource can be currently released to the Core0 partition for use; when the Core1 partition does not occupy the PCIE resource, the Linux system of the Core1 partition triggers an inter-core interrupt with the interrupt number being 10, so as to inform the Core0 partition that the PCIE resource has been released; or when the Core1 partition is currently occupying the PCIE resource, the Core1 partition ignores an interrupt request from the Core0, and in this case, the Core0 partition cannot use the PCIE resource; and when the Core1 partition no longer uses the PCIE resource, the PCIE resource is released and the inter-core interrupt with the interrupt number being 10 is triggered, and the PCIE resource is used by the Core0 partition. Similarly, inter-core interrupts with the interrupt number being 9 and interrupt number being 11 are used for the Core1 to request the PCIE resource from the Core0. The interconnection control logic of a PCIE controller of the BMC management system and different hardware partitions of the Host system is configured by the above inter-core communication process, and the topological transformation of a physical link is switched by the PCIE Switch device.

In some embodiments, the system running method of a BMC provided in the present disclosure facilitates rapid application promotion of a host system hardware partition technology, such that an increase in chip costs due to the upgrading of the architecture of the BMC processor is avoided, thereby reducing the design cost of a future server system, and finally achieving the objective of significantly reducing the design cost and improving the computing performance of the host system and the BMC system.

From the above descriptions about the implementation modes, those skilled in the art can clearly know that the method according to the foregoing embodiments can be implemented in a manner of combining software and a necessary universal hardware platform, and of course, can also be implemented through hardware, but the former is a preferred implementation mode under many circumstances. Based on such an understanding, the technical solutions of the present disclosure substantially or parts making contributions to the related art can be embodied in form of software product, and the computer software product is stored in a non-volatile computer-readable storage medium (for example, a ROM/RAM), a magnetic disk and an optical disk), including a plurality of instructions configured to enable a terminal device (which can be a mobile phone, a computer, a server, a network device, or the like) to execute the method in each embodiment of the present disclosure.

This embodiment further provides a BMC, including: a target operating system and a target hardware interface. The target hardware interface is configured to connect the target operating system and a target hardware partition among a plurality of hardware partitions on a server host system. The target operating system is configured to manage the target hardware partition through the target hardware interface.

Through the above BMC, the plurality of hardware interfaces are arranged on the BMC, and each hardware interface is configured to connect the hardware partition and the operating system corresponding to the hardware partition. When the target operating system runs on the BMC, the target hardware partition among the plurality of hardware partitions divided on the server host system can be managed through the target hardware interface corresponding to the target operating system, that is, by allocating the corresponding hardware interface to each operating system, different operating systems are allowed to manage the hardware partitions corresponding to the operating systems divided on the server host system, such that it is not necessary to modify the system architecture of the BMC according to the architectures of the hardware partitions of different server host systems, such that the adaptability and universality of the hardware partitions of the server host system are improved. Therefore, the technical problem of low applicability of hardware partitions of a server host system can be solved, thereby achieving the technical effect of improving the applicability of the hardware partitions of the server host system.

In some embodiments, the BMC can be, but is not limited to, a dedicated controller that provides intelligent management to a mainboard and is configured to monitor and manage a server based on IPMI technical design specifications, such as a BMC. In some embodiments, the BMC can be provided with an independent arithmetic unit, then a controller, a memory, and an input/output device, in some embodiments, the BMC can also have an independent software system, which includes a basic startup system, an operating system, and various application programs run on the BMC system. On the mainboard, in some embodiments, the BMC can be an independent insertion component, in some embodiments, the BMC can also be designed as a component integrated on the mainboard, which is often designed on a server or a mainboard of a computer.

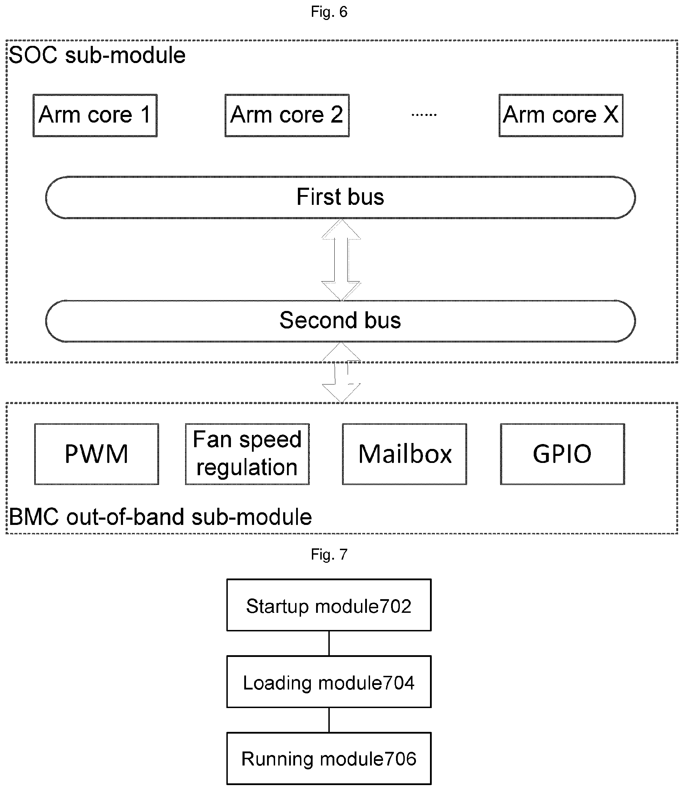

The above BMC can be, but is not limited to, any chip that is allowed to run a plurality of operating systems in the same processor, such as a BMC chip. For example, an embodiment of the BMC chip can be shown in Fig. 6. The hardware of the BMC can include, but is not limited to, a System On Chip (SOC, which means that it is a product, and is an integrated circuit having a dedicated target, including the entire contents of a complete system with embedded software. At the same time, it is also a technology to implement an entire process starting from determination of a system function to division of software/hardware and completion of the design) sub-component and a BMC out-of-band sub-component. The SOC sub-component mainly includes ARM cores (ARM Core 1, ARM Core 2, ... , ARM Core X), and can also include, but is not limited to, a (Double Data Rate) DDR 4 controller (memory controller), a Media Access Control Address (MAC) controller (network controller), a Secure Digital (SD) Card/Embedded Multi Media Card (eMMC) controller (storage controller), a PCIE Root Complex (RC) controller, a Static Random-Access Memory (SRAM), and a Serial Peripheral Interface (SPI, a high-speed, full duplex, and synchronous communication bus) controller.

The cores are connected to the controllers by the second bus, so as to implement interaction between the cores and the controllers. At the same time, ARM cores are connected to the first bus (for example, the cores can be connected via an Advanced eXtensible Interface (AXI) bridge), and communication between cores is realized via the first bus. In addition, the interconnection between the first bus and the second bus is also realized in the SOC sub-component (for example, by means of bridge conversion). In this way, a physical path is provided for the SOC sub-component to access peripherals on the second bus.

The DDR4 controller can be connected to other components or devices through a DDR4 Physical Layer (PHY) interface. The MAC controller is connected to other components or devices through the Reduced Gigabit Media Independent Interface (RGMII). The SD card/eMMC controller is connected to other components or devices through the SD interface. The PCIE RC controller is connected to other components or devices through the PCIE PHY interface.

The BMC out-of-band sub-component mainly includes the controller corresponding to the chip peripherals such as a Pulse Width Modulation (PWM, which is a significantly-effective technology that controls an analog circuit by using a digital output of a microprocessor), a General-purpose input/output (GPIO), FanTech (fan speed regulation), mailbox, etc. These controllers can realize out-of-band management functions such as Platform Environment Control Interface (PECI) communication of the BMC (e.g., the use of the GPIO to simulate the PECI), fan regulation, etc. The BMC out-of-band sub-component can be, but is not limited to, interacted with the SOC sub-component through an Advanced Peripheral Bus (APB).

In some embodiments, the BMC chip implement the interaction among an on-chip ARM core, a storage unit, and a controller hardware resource through the first bus and the second bus. Dynamic balanced scheduling of the processor resources mainly involves the ARM core resource scheduling of the BMC chip; and inter-core communication refers to the communication performed between the ARM cores.

In some embodiments, the system running method of a BMC provided in the present disclosure is based on the plurality of BMC management systems running in a multi-core processor hard core of the BMC, and these BMC management systems run in the same embedded system at the same time. The system running method of a BMC provided in the present disclosure is based on the multi-core processor hard core, the hardware resources such as I2C, GPIO, etc. of the BMC processor are partitioned according to the number of cores, and these hardware partition resources constitute an independent system with one or several BMC processor hard cores, so as to run the independent BMC management system. For the single hardware resource in the BMC processor, such as the PCIE controller, the physical link realizes the interaction between the BMC processor systems and the plurality of host systems through the PCIE Switch device, and the control logic is controlled by the plurality of BMC management systems by means of inter-core communication.

In some embodiments, the BMC can be, but is not limited to, configured to: find, from processor cores and hardware interfaces having a correspondence relationship, the target hardware interface corresponding to a target processor core used by the target operating system, wherein the hardware interfaces on the BMC are allocated to each group of processor cores according to hardware architectures of the hardware partitions corresponding to each group of processor cores, so as to obtain the processor cores and the hardware interfaces having the correspondence relationship; and load the target hardware interface for the target operating system on the target processor core.

In some embodiments, the BMC can include, but is not limited to, the plurality of processor cores, and the plurality of processor cores are run by being deployed on the same BMC multi-core processor hard core. The BMC can be divided into the plurality of core partitions by using the processor core, which is the CPU core, as a partitioning unit.

In some embodiments, if the BMC includes two processor cores: a core 0 and a core 1, and four hardware interfaces are deployed on the BMC: a hardware interface 1, a hardware interface 2, a hardware interface 3, and a hardware interface 4, the hardware interface 1 and the hardware interface 2 are allocated to the core 0 according to a hardware architecture of the hardware partition corresponding to the core 0 (processor core), that is, the hardware interface 1 and the hardware interface 2 correspond to the core 0; and the hardware interface 3 and the hardware interface 4 are allocated to the core 1 according to a hardware architecture of the hardware partition corresponding to the core 1, that is, the hardware interface 3 and the hardware interface 4 correspond to the core 1. Then, when the processor used by the target operating system is the core 0 (target processor core), the hardware interface 1 and the hardware interface 2 can be found as the target hardware interfaces, such that the target hardware interfaces are loaded for the target operating system on the core 0.

In some embodiments, the BMC can be, but is not limited to, configured to: analyze a target device tree of the target processor core to obtain the target hardware interface, where the hardware interfaces on the BMC are allocated to each group of processor cores to obtain the processor cores and the hardware interfaces having the correspondence relationship, and physical addresses of the hardware interfaces on the BMC use a unified addressing scheme; load a driver of the target hardware interface on the target processor core; and boot a file system of the target operating system on the target processor core, so as to complete bootstrapping process of the target operating system.

In some embodiments, different hardware resources can be, but are not limited to, allocated to different processor cores corresponding to different device tree files through different device tree files, that is, the hardware interfaces on the BMC are allocated to corresponding different processor cores through different device tree files, thereby obtaining the processor cores and the hardware interfaces having the correspondence relationship.

In some embodiments, the BMC can be, but is not limited to, configured to: before loading the target hardware interface for the target operating system, acquire the plurality of hardware partitions of the host system; before loading the target hardware interface for the target operating system, allocate the processor cores on the BMC for each target hardware partition among the plurality of hardware partitions to obtain the target processor cores, and allocate the hardware interfaces on the BMC for each target hardware partition to obtain the target hardware interfaces, where the target processor core at least meets a management running requirement of the target hardware partition, and the target hardware interface at least meets a hardware connection requirement of the target hardware partition; and before loading the target hardware interface for the target operating system, establish a correspondence relationship between the target processor core and the target hardware interface, so as to obtain the processor cores and the hardware interfaces having the correspondence relationship.

In some embodiments, if N core partitions are divided according to the number N of the processor cores mounted on the BMC, that the host system has M hardware partitions is acquired, and then a correspondence relationship between the M hardware partitions and the N core partitions can be established, such that target processor cores that meet a management running requirement of the target hardware partition are allocated for the target hardware partition among the M hardware partitions, and the target hardware interfaces that meet a hardware connection requirement of the target hardware partition are allocated for the target hardware partition.

In some embodiments, the hardware interfaces on the BMC can be, but are not limited to, allocated to corresponding different processor cores through different device tree files to establish the correspondence relationship between the target processor core and the target hardware interface, so as to obtain the processor cores and the hardware interfaces having the correspondence relationship.

In some embodiments, the BMC can be, but is not limited to, configured to perform at least one of the following: evenly allocate the processor cores on the BMC to each target hardware partition; or allocate one or more processor cores on the BMC for the target hardware partition according to a running architecture of each target hardware partition among the plurality of hardware partitions, so as to obtain the target processor cores.

In some embodiments, if N core partitions are divided according to the number N of the processor cores mounted on the BMC, that the host system has M hardware partitions is acquired, and then the target processor cores can be allocated for the target hardware partition by using one of the following two allocation methods: 1, n processor cores corresponding to the N core partitions are evenly allocated to m target hardware partitions corresponding to the M hardware partitions. 2, one processor core or more processor cores of the n processor cores on the BMC are allocated for the m target hardware partitions according to a running architecture of each target hardware partition among the M hardware partitions.

In some embodiments, if the method of allocating the target processor core for the target hardware partition according to the running architecture is used, the following two preferred allocation strategies can be used: 1, a CPU is preferred, indicating that one processor core or more processor cores that meet or are closest to the number of CPU cores required for the running of the target hardware partition are allocated for the target hardware partition. 2, a memory is preferred, indicating that one processor core or more processor cores that meet or are closest to a memory bandwidth required for the running of the target hardware partition are allocated for the target hardware partition.

In some embodiments, the target hardware interface can include, but is not limited to, a target exclusive interface and/or a target shared interface. The target exclusive interface is designed as a hardware interface that is only allowed to be accessed by a target processor core in which the target operating system is located; and the target shared interface is designed as a hardware interface that is allowed to be accessed by the target processor core and a reference processor core in a plurality of groups of processor cores.

In some embodiments, the target hardware interface can be, but is not limited to, one or more hardware interface resources strongly related to the BMC system, such as a Low pin count Bus (LPC), I2C0-I2C5, LAN0, LAN1, and a PCIE hardware interface resource, etc. The target hardware interface can be, but is not limited to, deployed on a processor of the BMC. After the target operating system is started up, the target hardware interface can be loaded for the target operating system on the BMC processor operated by the target operating system, so as to establish a connection between the target operating system and the target hardware partition, such that the target operating system manages various hardware resources in the target hardware partition.

In some embodiments, the reference processor core can be, but is not limited to, CPU cores of one or more processors among the plurality of groups of processors other than a target processor. The target shared interface and the target exclusive interface can be, but are not limited to, use a unified addressing form in the BMC management system, and the plurality of processor cores all have access permissions to the target shared interface.

In some embodiments, the BMC can be, but is not limited to, configured to perform at least one of the following: when there is a first type of hardware interfaces on the BMC that has a number of resources greater than or equal to a number of resources required in the plurality of hardware partitions, allocate, according to the hardware architecture of each target hardware partition, the first type of hardware interfaces to the target hardware partition as target exclusive interfaces in the target hardware interfaces, where the target exclusive interface is designed as a hardware interface that is only allowed to be accessed by the target processor core; or when there is a second type of hardware interfaces on the BMC that has a number of resources less than a number of resources required in the plurality of hardware interfaces, establish, as a target shared interface in the target hardware interfaces, a shared relationship between the target processor core and a reference processor core in the plurality of groups of processor cores on the BMC with respect to the second type of hardware interfaces, where the target shared interface is designed as a hardware interface that is allowed to be accessed by the target processor core and the reference processor core in the plurality of groups of processor cores.

In some embodiments, the hardware resources deployed on the BMC can be, but are not limited to, two types: a shared resource and an exclusive resource. The exclusive resource can include, but is not limited to, hardware interface resources such as LPCO, LPC1, I2C0-I2C5, LAN0, LAN1, etc. These resources are exclusive resources of the core partition in which the resources are located, and can only be accessed by the target operating system corresponding to the current core partition. The shared resource can include, but is not limited to, a PCIE interface resource. The shared resource is a shared resource of all core partitions on the BMC, that is, the operating systems corresponding to all the core partitions all have a permission to access the shared resource, such that a certain mechanism can be designed to ensure time-sharing access of different core partitions to the shared resource.

In some embodiments, that is to say, if the number of the first types of hardware interfaces on the BMC is N, and if the number of resources owned by N first types of hardware interfaces is greater than or equal to the number of resources required in the plurality of hardware partitions, it indicates that resources required for the loading of the plurality of hardware partitions can all be provided by the N first types of hardware interfaces. In this case, the first type of hardware interfaces can be allocated, as a target exclusive resource, to the target hardware partition according to the hardware architecture of each target hardware partition, and the target exclusive resource can be used to independently run the target operating system.

In some embodiments, that is to say, if the number of the second types of hardware interfaces on the BMC is M, and if the number of resources owned by the M second types of hardware interfaces is less than the number of resources required in the plurality of hardware partitions, it indicates that the M second types of hardware interfaces cannot be evenly allocated to the plurality of hardware partitions to ensure that the hardware resource of each hardware partition meets a resource requirement. In this case, the shared relationship in which the target processor core and the reference processor core both can access the second type of hardware interfaces can be established, and the second type of hardware interfaces are used as the target sharing resource, so as to allow time-sharing access to the plurality of processor cores.

In some embodiments, the BMC can be, but is not limited to, configured to: when the target operating system has a requirement to access a target shared interface in the target hardware interface, send, by the target operating system, a first interrupt request to a reference processor core in a plurality of groups of processor cores on the BMC, where the target shared interface is designed as a hardware interface that is allowed to be accessed by the target processor core and the reference processor core used by the target operating system, and the first interrupt request is used for requesting the use of the target shared interface; receive a second interrupt request returned by a reference operating system run on the reference processor core in response to the first interrupt request, where the second interrupt request is used for indicating that the target shared interface has been released; and in response to the second interrupt request, access the target shared interface through the target operating system.

In some embodiments, the reference operating system can be, but is not limited to, one or more operating systems among the plurality of operating systems running on the BMC other than the target operating system.

In some embodiments, after receiving the first interrupt request that requests the use of the target shared interface, the reference operating system returns the second interrupt request which is obtained in response to the first interrupt request and indicates that the target shared interface has been released to the target operating system, thereby completing an access action of the target operating system to the target shared interface.

In some embodiments, the target operating system can be, but is not limited to, send the first interrupt request to the reference operating system according to the self service requirements by means of inter-core communication, so as to access the target shared interface, and the reference operating system indicates the releasing of the target shared interface by means of inter-core communication and returns a releasing result to the target operating system through the second interrupt request, thereby implementing the accessing of the target operating system to the target shared interface. Therefore, the plurality of systems all have access capability to the target shared interface without causing conflicts.

In some embodiments, the plurality of processor cores all have an access permission to the target shared interface. Then, when the plurality of processor cores access the target shared interface in the system at the same time, it must result in an access conflict, triggering a system error. Therefore, a particular access mechanism needs to be designed for the target shared interface to ensure correct access to the target shared interface by different partitions.

In some embodiments, the interrupt request can be, but is not limited to, interacted between the target operating system and the reference operating system by means of inter-core communication. The inter-core communication mode can be implemented by defining an interrupt vector.

In some embodiments, a customized interrupt vector is used in the present disclosure to implement inter-core communication, so as to realize exclusive access control of the partition shared resources. For example, the target operating system and the reference operating system both are the Linux systems, the BMC is mounted with two processor cores, which are divided into two core partitions: the Core0 partition and the Core1 partition. The Linux system totally has 16 SGI numbers to implement inter-core communication, wherein 8-15 interrupt numbers can be defined by a user.

In some embodiments, the BMC can be, but is not limited to, configured to: determine, by the target operating system, whether the target shared interface has been occupied; and when the target operating system does not occupy the target shared interface, send the first interrupt request to the reference processor core by the target operating system.

In some embodiments, whether the target operating system has occupied the target shared interface is determined by determining a use situation of the current hardware resource of the target operating system. For example, the PCIE hardware interface is the target shared interface. If the target operating system is currently using the PCIE hardware resource, it can be determined that the target operating system has occupied the target shared interface, and in this case, the first interrupt request does not need to be sent to the reference processor core by the target operating system; and if the target operating system is not using the PCIE hardware resource currently, it can be determined that the target operating system does not occupy the target shared interface, and in this case, the first interrupt request needs to be sent to the reference processor core by the target operating system.

In some embodiments, when the target operating system does not occupy the target shared interface, the interrupt number requesting to occupy the target shared interface can be, but is not limited to, found from an inter-core interrupt vector configuration solution in the embodiments of the present disclosure according to the core of the target operating system, so as to send the first interrupt request to the reference processor core, thereby implementing the interaction of the interrupt requests by means of inter-core communication.

In some embodiments, the BMC can be, but is not limited to, configured to: after accessing the target shared interface through the target operating system, receive, by the target operating system, a third interrupt request sent by the reference operating system, wherein the third interrupt request is used for requesting the use of the target shared interface; after accessing the target shared interface through the target operating system, determine, by the target operating system, whether the target shared interface is being used; after accessing the target shared interface through the target operating system, when the target shared interface is being used, wait for the end of the use of the target shared interface; after accessing the target shared interface through the target operating system, when the target shared interface is not used or the use of the target shared interface is ended, release the target shared interface; and after accessing the target shared interface through the target operating system, send a fourth interrupt request to the reference operating system by the target operating system, where the fourth interrupt request is used for indicating that the target shared interface has been released.

In some embodiments, after the target operating system receives the third interrupt request that is sent by the reference system and requests the use of the target shared interface, whether the target operating system has occupied the target shared interface is determined by determining a use situation of the current hardware resource of the target operating system. For example, the PCIE hardware interface is the target shared interface. If the target operating system is currently using the PCIE hardware resource, it can be determined that the target operating system has occupied the target shared interface, and in this case, the end of the use of the PCIE hardware interface needs to be waited for, and at the end of the use, the target operating system releases the PCIE hardware interface; and if the target operating system is not using the PCIE hardware resource currently, it can be determined that the target operating system does not occupy the target shared interface, and the target operating system releases the PCIE hardware interface.

In some embodiments, when the target operating system does not occupy the target shared interface or the target system occupies the target shared interface but has already used the target shared interface, the interrupt number indicating that the target shared interface has been released can be, but is not limited to, found from the inter-core interrupt vector configuration solution in the embodiments of the present disclosure according to the core of the target operating system, so as to send the fourth interrupt request to the reference processor core, thereby informing the processor core of the reference operating system requiring to use the target shared interface that the target shared interface is available current, and thus implementing the interaction of the interrupt requests by means of inter-core communication.

In some embodiments, each interrupt request is transmitted between the systems by means of software protocols, in some embodiments, each interrupt request is also transmitted by means of hardware components, but it is not limited to this way.

In some embodiments, a target device tree is deployed in the target operating system, the target device tree is configured to load a driver of the target hardware interface, and physical addresses of hardware interfaces on the BMC use a unified addressing scheme.

In some embodiments, each processor core corresponds to one device tree, and the device tree corresponding to the target processor core is a target device tree. The device tree can be, but is not limited to, a Linux device tree driver, which is configured to provide hardware information for the operating system. The device tree driver is loaded during startup of a Linux kernel, such that the system can identify and manage a hardware device. The device tree driver provides the address, interrupt, power supply, and other attributes of the hardware device, so as to assist the operating system to correctly find, identify, and control the hardware device. The device tree is generally described by a file called a Device Tree Source (DTS). This file includes the information and attributes of the hardware device, such as the model, manufacturer, I/O address range, interrupt controller, pin, etc. of a device. When the system is started up, the DTS file is compiled into a binary file (DTB), and is loaded and analyzed by the Linux kernel.

In some embodiments, the physical addresses of the hardware interfaces on the BMC use the unified addressing scheme, that is, resources such as LPCO, LPC1, I2C0-I2C5, LAN0, LAN1, PCIE, etc. have mutually-exclusive address spaces in the BMC system. In this way, as long as the device tree files of different core partitions on the BMC ensure that the hardware resources defined are different, it can ensure that other core partitions are not affected when each core partition performs hardware resource access.

In some embodiments, the BMC further includes a Uboot loader. The Uboot loader is configured to start up a kernel of the corresponding target operating system on each group of processor cores on the BMC. The kernel of the target operating system is configured to analyze the driver of the target hardware interface loaded by the target device tree.

In some embodiments, the Uboot loader can be, but is not limited to, a boot loader that can starts up an operating system kernel and can deploy and load the entire computer system, such as a Uboot loader (an open source project under the terms of the GPL, serves to boot the system).

In some embodiments, the BMC further includes a SPL. The SPL is configured to boot the Uboot loader to execute a code.

In some embodiments, the SPL can be, but is not limited to, a program loader compiling an SPL code, which is mainly responsible for initializing an external RAM and an environment, and loading a Uboot to be mirrored into the RAM for execution.

In some embodiments, the BMC further includes a boot memory. The boot memory is configured to perform secure boot verification on the SPL.

In some embodiments, the boot memory can be, but is not limited to, a Boot ROM, which is a small mask ROM or a write-protect flash memory in an embedded processor chip, including a first piece of the code executed when the processor is powered on or reset.

In some embodiments, the boot memory can be, but is not limited to, stored in a specific storage space on the BMC, and is particularly configured to start up the target operating system. One processor core of the target operating system can be, but is not limited to, configured to execute the boot loader of the boot memory, which can be, but is not limited to, start up the target operating system by executing the boot loader of the boot memory.

In some embodiments, the process of performing secure boot verification on the code of the SPL by the boot memory can include, but is not limited to: the boot memory reads the code of the SPL and a verification code, an operation is performed on the code of the SPL through an agreed-upon calculation method (e.g., Hashing operation), so s to obtain an calculated value, and then the calculated value is compared with the read verification code, if the calculated value is consistent with the verification code, a checking result is normal; and if the calculated value is inconsistent with the verification code, the checking result is abnormal.

In some embodiments, the SPL can also perform secure boot verification on a code of the Uboot loader; the SPL reads the code of the Uboot loader and a verification code; an operation is performed on the code of the Uboot loader by an agreed-upon calculation method (e.g., Hashing operation, which can be the same or different from the operation mode of the boot memory to check the SPL), so as to obtain an calculated value; and then the calculated value is compared with the read verification code, if the calculated value is consistent with the verification code, a checking result is normal; and if the calculated value is inconsistent with the verification code, the checking result is abnormal. When the checking result is normal, the target operating system is loaded by the Uboot loader.

In some embodiments, a key point of an architecture of the BMC provided in the present disclosure is that hardware resource partitioning based on the processor core is implemented in the same BMC processor. The partition exclusive hardware resources are accessed immediately by the operating systems of the corresponding partition; access control to the partition shared hardware resources is implemented by means of inter-core communication among different partition systems; and the effect of hardware partitioning of a server management unit is finally achieved. Therefore, the direct application of a conventional BMC management sub-system in the host hardware partition system can be enabled, and an increase in chip costs due to the upgrading of the architecture of the BMC processor is effectively avoided, thereby achieving the objective of reducing the design cost of the entire server system.

This embodiment further provides a server. The server includes a BMC and a server host system. The BMC includes a target operating system and a target hardware interface, the server host system includes a plurality of hardware partitions, and the target hardware interface establishes a connection between the target operating system and a target hardware partition among the plurality of hardware partitions. The BMC is configured to manage the target hardware partition through the target operating system.

Through the above server, the plurality of hardware interfaces are arranged on the BMC, and each hardware interface is configured to connect the hardware partition and the operating system corresponding to the hardware partition. When the target operating system runs on the BMC, the target hardware partition among the plurality of hardware partitions divided on the server host system can be managed through the target hardware interface corresponding to the target operating system, that is, by allocating the corresponding hardware interface to each operating system, different operating systems are allowed to manage the hardware partitions corresponding to the operating systems divided on the server host system, such that it is not necessary to modify the system architecture of the BMC according to the architectures of the hardware partitions of different server host systems, and the adaptability and universality of the hardware partitions of the server host system are improved. Therefore, the technical problem of low applicability of hardware partitions of a server host system can be solved, thereby achieving the technical effect of improving the applicability of the hardware partitions of the server host system.

In some embodiments, the BMC in the above server can be, but is not limited to, a dedicated controller that provides intelligent management to a mainboard and is configured to monitor and manage a server based on IPMI technical design specifications, such as a BMC. In some embodiments, the BMC can be provided with an independent arithmetic unit, then a controller, a memory, and an input/output device, in some embodiments, the BMC can also have an independent software system, which includes a basic startup system, an operating system, and various application programs run on the BMC system. On the mainboard, in some embodiments, the BMC can be an independent insertion component, in some embodiments, the BMC can also be designed as a component integrated on the mainboard, which is often designed on a server or the mainboard of a computer.

In some embodiments, the system running method of a BMC provided in the present disclosure is based on the plurality of BMC management systems running in a multi-core processor hard core of the BMC, and these BMC management systems run in the same embedded system at the same time. The system running method of a BMC provided in the present disclosure is based on the multi-core processor hard core, the hardware resources such as I2C, GPIO, etc. of the BMC processor are partitioned according to the number of cores, and these hardware partition resources constitute an independent system with one or several BMC processor hard cores, so as to run the independent BMC management system. For the single hardware resource in the BMC processor, such as the PCIE controller, the physical link realizes the interaction between the BMC processor systems and the plurality of host systems through the PCIE Switch device, and the control logic is controlled by the plurality of BMC management systems by means of inter-core communication.

In some embodiments, the server can be, but is not limited to, configured to: find, from processor cores and hardware interfaces having a correspondence relationship, the target hardware interface corresponding to a target processor core used by the target operating system, wherein the hardware interfaces on the BMC are allocated to each group of processor cores according to hardware architectures of the hardware partitions corresponding to each group of processor cores, so as to obtain the processor cores and the hardware interfaces having the correspondence relationship; and load the target hardware interface for the target operating system on the target processor core.

In some embodiments, the BMC can include, but is not limited to, the plurality of processor cores, and the plurality of processor cores are run by being deployed on the same BMC multi-core processor hard core. The BMC can be divided into the plurality of core partitions by using the processor core, which is the CPU core, as a partitioning unit.

In some embodiments, if the BMC includes two processor cores: a core 0 and a core 1, and four hardware interfaces are deployed on the BMC: a hardware interface 1, a hardware interface 2, a hardware interface 3, and a hardware interface 4, the hardware interface 1 and the hardware interface 2 are allocated to the core 0 according to a hardware architecture of the hardware partition corresponding to the core 0 (processor core), that is, the hardware interface 1 and the hardware interface 2 correspond to the core 0; and the hardware interface 3 and the hardware interface 4 are allocated to the core 1 according to a hardware architecture of the hardware partition corresponding to the core 1, that is, the hardware interface 3 and the hardware interface 4 correspond to the core 1. Then, when the processor used by the target operating system is the core 0 (target processor core), the hardware interface 1 and the hardware interface 2 can be found as the target hardware interfaces, such that the target hardware interfaces are loaded for the target operating system on the core 0.

In some embodiments, the server host system can be, but is not limited to, an operating system that carries a plurality of CPUs and is installed on a computer host, which is generally a system such as Windows, Mac, OS, etc. The systems manage hardware and software resources of the computer, and provide services and interfaces for users or application programs to use.

In some embodiments, the server can be, but is not limited to, configured to: analyze a target device tree of the target processor core to obtain the target hardware interface, where the hardware interfaces on the BMC are allocated to each group of processor cores to obtain the processor cores and the hardware interfaces having the correspondence relationship, and physical addresses of the hardware interfaces on the BMC use a unified addressing scheme; load a driver of the target hardware interface on the target processor core; and boot a file system of the target operating system on the target processor core, so as to complete bootstrapping process of the target operating system.

In some embodiments, different hardware resources can be, but are not limited to, allocated to different processor cores corresponding to different device tree files through different device tree files, that is, the hardware interfaces on the BMC are allocated to corresponding different processor cores through different device tree files, thereby obtaining the processor cores and the hardware interfaces having the correspondence relationship.

In some embodiments, the server can be, but is not limited to, configured to: before loading the target hardware interface for the target operating system, acquire the plurality of hardware partitions of the host system; before loading the target hardware interface for the target operating system, allocate the processor cores on the BMC for each target hardware partition among the plurality of hardware partitions to obtain the target processor cores, and allocate the hardware interfaces on the BMC for each target hardware partition to obtain the target hardware interfaces, where the target processor core at least meets a management running requirement of the target hardware partition, and the target hardware interface at least meets a hardware connection requirement of the target hardware partition; and before loading the target hardware interface for the target operating system, establish a correspondence relationship between the target processor core and the target hardware interface, so as to obtain the processor cores and the hardware interfaces having the correspondence relationship.

In some embodiments, if N core partitions are divided according to the number N of the processor cores mounted on the BMC, that the host system has M hardware partitions is acquired, and then a correspondence relationship between the M hardware partitions and the N core partitions can be established, such that target processor cores that meet a management running requirement of the target hardware partition are allocated for the target hardware partition among the M hardware partitions, and the target hardware interfaces that meet a hardware connection requirement of the target hardware partition are allocated for the target hardware partition.

In some embodiments, the hardware interfaces on the BMC can be, but are not limited to, allocated to corresponding different processor cores through different device tree files to establish the correspondence relationship between the target processor core and the target hardware interface, so as to obtain the processor cores and the hardware interfaces having the correspondence relationship.

In some embodiments, the server can be, but is not limited to, configured to perform at least one of the following: evenly allocate the processor cores on the BMC to each target hardware partition; or allocate one or more processor cores on the BMC for the target hardware partition according to a running architecture of each target hardware partition among the plurality of hardware partitions, so as to obtain the target processor cores.

In some embodiments, if N core partitions are divided according to the number N of the processor cores mounted on the BMC, that the host system has M hardware partitions is acquired, and then the target processor cores can be allocated for the target hardware partition by using one of the following two allocation methods: 1, n processor cores corresponding to the N core partitions are evenly allocated to m target hardware partitions corresponding to the M hardware partitions. 2, one processor core or more processor cores of the n processor cores on the BMC are allocated for the m target hardware partitions according to a running architecture of each target hardware partition among the M hardware partitions.

In some embodiments, if the method of allocating the target processor core for the target hardware partition according to the running architecture is used, the following two preferred allocation strategies can be used: 1, a CPU is preferred, indicating that one processor core or more processor cores that meet or are closest to the number of CPU cores required for the running of the target hardware partition are allocated for the target hardware partition. 2, a memory is preferred, indicating that one or more processor cores that meet or are closest to a memory bandwidth required for the running of the target hardware partition are allocated for the target hardware partition.

In some embodiments, the target hardware interface can include, but is not limited to, a target exclusive interface and/or a target shared interface. The target exclusive interface is designed as a hardware interface that is only allowed to be accessed by a target processor core in which the target operating system is located; and the target shared interface is designed as a hardware interface that is allowed to be accessed by the target processor core and a reference processor core in a plurality of groups of processor cores. The target exclusive interface is directly connected to the target hardware partition. The target shared interface is connected to a partition switching device, and the partition switching device is separately connected to the target hardware partition and a reference hardware partition corresponding to the reference processor core.

In some embodiments, the target hardware interface can be, but is not limited to, one or more hardware interface resources strongly related to the BMC system, such as a Low pin count Bus (LPC), I2C0-I2C5, LAN0, LAN1, and a PCIE hardware interface resource, etc. The target hardware interface can be, but is not limited to, deployed on a processor of the BMC. After the target operating system is started up, the target hardware interface can be loaded for the target operating system on the BMC processor operated by the target operating system, so as to establish a connection between the target operating system and the target hardware partition, such that the target operating system manages various hardware resources in the target hardware partition.

In some embodiments, the reference processor core can be, but is not limited to, CPU cores of one or more processors among the plurality of groups of processors other than a target processor. The target shared interface and the target exclusive interface can be, but are not limited to, use a unified addressing form in the BMC management system, and the plurality of processor cores all have access permissions to the target shared interface.

In some embodiments, the server can be, but is not limited to, configured to perform at least one of the following: when there is a first type of hardware interfaces on the BMC that has a number of resources greater than or equal to a number of resources required in the plurality of hardware partitions, allocate, according to the hardware architecture of each target hardware partition, the first type of hardware interfaces to the target hardware partition as target exclusive interfaces in the target hardware interfaces, where the target exclusive interface is designed as a hardware interface that is only allowed to be accessed by the target processor core; or when there is a second type of hardware interfaces on the BMC that has a number of resources less than a number of resources required in the plurality of hardware interfaces, establish, as a target shared interface in the target hardware interfaces, a shared relationship between the target processor core and a reference processor core in the plurality of groups of processor cores on the BMC with respect to the second type of hardware interfaces, where the target shared interface is designed as a hardware interface that is allowed to be accessed by the target processor core and the reference processor core in the plurality of groups of processor cores.

In some embodiments, the hardware resources deployed on the BMC can be, but are not limited to, two types: a shared resource and an exclusive resource. The exclusive resource can include, but is not limited to, hardware interface resources such as LPCO, LPC1, I2C0-I2C5, LAN0, LAN1, etc. These resources are exclusive resources of the core partition in which the resources are located, and can only be accessed by the target operating system corresponding to the current core partition. The shared resource can include, but is not limited to, a PCIE interface resource. The shared resource is a shared resource of all core partitions on the BMC, that is, the operating systems corresponding to all the core partitions all have a permission to access the shared resource, such that a certain mechanism can be designed to ensure time-sharing access of different core partitions to the shared resource.

In some embodiments, that is to say, if the number of the first types of hardware interfaces on the BMC is N, and if the number of resources owned by N first types of hardware interfaces is greater than or equal to the number of resources required in the plurality of hardware partitions, it indicates that resources required for the loading of the plurality of hardware partitions can all be provided by the N first types of hardware interfaces. In this case, the first type of hardware interfaces can be allocated, as a target exclusive resource, to the target hardware partition according to the hardware architecture of each target hardware partition, and the target exclusive resource can be used to independently run the target operating system.

In some embodiments, that is to say, if the number of the second types of hardware interfaces on the BMC is M, and if the number of resources owned by the M second types of hardware interfaces is less than the number of resources required in the plurality of hardware partitions, it indicates that the M second types of hardware interfaces cannot be evenly allocated to the plurality of hardware partitions to ensure that the hardware resource of each hardware partition meets a resource requirement. In this case, the shared relationship in which the target processor core and the reference processor core both can access the second type of hardware interfaces can be established, and the second type of hardware interfaces are used as the target shared resource, so as to allow time-sharing access to the plurality of processor cores.

In some embodiments, the server can be, but is not limited to, configured to: when the target operating system has a requirement to access a target shared interface in the target hardware interface, send, by the target operating system, a first interrupt request to a reference processor core in a plurality of groups of processor cores on the BMC, where the target shared interface is designed as a hardware interface that is allowed to be accessed by the target processor core and the reference processor core used by the target operating system, and the first interrupt request is used for requesting the use of the target shared interface; receive a second interrupt request returned by a reference operating system run on the reference processor core in response to the first interrupt request, where the second interrupt request is used for indicating that the target shared interface has been released; and in response to the second interrupt request, access the target shared interface through the target operating system.

In some embodiments, the reference operating system can be, but is not limited to, one or more operating systems among the plurality of operating systems running on the BMC other than the target operating system.

In some embodiments, after receiving the first interrupt request that requests the use of the target shared interface, the reference operating system returns the second interrupt request which is obtained in response to the first interrupt request and indicates that the target shared interface has been released to the target operating system, thereby completing an access action of the target operating system to the target shared interface.

In some embodiments, the target operating system can be, but is not limited to, send the first interrupt request to the reference operating system according to the self service requirements by means of inter-core communication, so as to access the target shared interface, and the reference operating system indicates the releasing of the target shared interface by means of inter-core communication and returns a releasing result to the target operating system through the second interrupt request, thereby implementing the accessing of the target operating system to the target shared interface. Therefore, the plurality of systems all have access capability to the target shared interface without causing conflicts.

In some embodiments, the plurality of processor cores all have an access permission to the target shared interface. Then, when the plurality of processor cores access the target shared interface in the system at the same time, it must result in an access conflict, triggering a system error. Therefore, a particular access mechanism needs to be designed for the target shared interface to ensure correct access to the target shared interface by different partitions.

In some embodiments, the interrupt request can be, but is not limited to, interacted between the target operating system and the reference operating system by means of inter-core communication. The inter-core communication mode can be implemented by defining an interrupt vector.

In some embodiments, a customized interrupt vector is used in the present disclosure to implement inter-core communication, so as to realize exclusive access control of the partition shared resources. For example, the target operating system and the reference operating system both are the Linux systems, the BMC is mounted with two processor cores, which are divided into two core partitions: the Core0 partition and the Core1 partition. The Linux system totally has 16 SGI numbers to implement inter-core communication, wherein 8-15 interrupt numbers can be defined by a user.

In some embodiments, the server can be, but is not limited to, configured to: determine, by the target operating system, whether the target shared interface has been occupied; and when the target operating system does not occupy the target shared interface, send the first interrupt request to the reference processor core by the target operating system.

In some embodiments, whether the target operating system has occupied the target shared interface is determined by determining a use situation of the current hardware resource of the target operating system. For example, the PCIE hardware interface is the target shared interface. If the target operating system is currently using the PCIE hardware resource, it can be determined that the target operating system has occupied the target shared interface, and in this case, the first interrupt request does not need to be sent to the reference processor core by the target operating system; and if the target operating system is not using the PCIE hardware resource currently, it can be determined that the target operating system does not occupy the target shared interface, and in this case, the first interrupt request needs to be sent to the reference processor core by the target operating system.

In some embodiments, when the target operating system does not occupy the target shared interface, the interrupt number requesting to occupy the target shared interface can be, but is not limited to, found from an inter-core interrupt vector configuration solution in the embodiments of the present disclosure according to the core of the target operating system, so as to send the first interrupt request to the reference processor core, thereby implementing the interaction of the interrupt requests by means of inter-core communication.

In some embodiments, the server can be, but is not limited to, configured to: after accessing the target shared interface through the target operating system, receive, by the target operating system, a third interrupt request sent by the reference operating system, where the third interrupt request is used for requesting the use of the target shared interface; after accessing the target shared interface through the target operating system, determine, by the target operating system, whether the target shared interface is being used; after accessing the target shared interface through the target operating system, when the target shared interface is being used, wait for the end of the use of the target shared interface; after accessing the target shared interface through the target operating system, when the target shared interface is not used or the use of the target shared interface is ended, release the target shared interface; and after accessing the target shared interface through the target operating system, send a fourth interrupt request to the reference operating system by the target operating system, where the fourth interrupt request is used for indicating that the target shared interface has been released.

In some embodiments, after the target operating system receives the third interrupt request that is sent by the reference system and requests the use of the target shared interface, whether the target operating system has occupied the target shared interface is determined by determining a use situation of the current hardware resource of the target operating system. For example, the PCIE hardware interface is the target shared interface. If the target operating system is currently using the PCIE hardware resource, it can be determined that the target operating system has occupied the target shared interface, and in this case, the end of the use of the PCIE hardware interface needs to be waited for, and at the end of the use, the target operating system releases the PCIE hardware interface; and if the target operating system is not using the PCIE hardware resource currently, it can be determined that the target operating system does not occupy the target shared interface, and the target operating system releases the PCIE hardware interface.

In some embodiments, when the target operating system does not occupy the target shared interface or the target system occupies the target shared interface but has already used the target shared interface, the interrupt number indicating that the target shared interface has been released can be, but is not limited to, found from the inter-core interrupt vector configuration solution in the embodiments of the present disclosure according to the core of the target operating system, so as to send the fourth interrupt request to the reference processor core, thereby informing the processor core of the reference operating system requiring to use the target shared interface that the target shared interface is available current, and thus implementing the interaction of the interrupt requests by means of inter-core communication.

In some embodiments, each interrupt request is transmitted between the systems by means of software protocols, in some embodiments, each interrupt request is also transmitted by means of hardware components, but it is not limited to this way.

In some embodiments, the server can be, but is not limited to, configured to: execute, on the BMC, an SPL to load a Uboot loader; and start up a kernel of the corresponding target operating system on each group of processor cores by the Uboot loader.

In some embodiments, the SPL can be, but is not limited to, a program loader compiling an SPL code, which is mainly responsible for initializing an external RAM and an environment, and loading a Uboot to be mirrored into the RAM for execution.

In some embodiments, the Uboot loader can be, but is not limited to, a boot loader that can starts up an operating system kernel and can deploy and load the entire computer system, such as a Uboot loader (an open source project under the terms of the GPL, serves to boot the system).

In some embodiments, the server can be, but is not limited to, configured to: power on the BMC, and wake up one processor core; boot a boot loader in a boot memory to execute on the processor core; perform secure boot verification on the SPL through the boot loader; and when the SPL passes the secure boot verification, execute the SPL to boot the Uboot loader to execute a code.

In some embodiments, the boot loader of the target operating system can be, but is not limited to, stored in a specific storage space on the BMC, and is particularly configured to start up the target operating system. One processor core of the target operating system can be, but is not limited to, configured to execute the boot loader of the target operating system; and the target operating system can be, but is not limited to, started up by executing the boot loader of the target operating system.

In some embodiments, the process of performing secure boot verification on the code of the SPL by the boot loader can include, but is not limited to: the boot loader reads the code of the SPL and a verification code, an operation is performed on the code of the SPL through an agreed-upon calculation method (e.g., Hashing operation), so s to obtain an calculated value, and then the calculated value is compared with the read verification code, if the calculated value is consistent with the verification code, a checking result is normal; and if the calculated value is inconsistent with the verification code, the checking result is abnormal.

In some embodiments, the SPL can also perform secure boot verification on a code of the Uboot loader; the SPL reads the code of the Uboot loader and a verification code; an operation is performed on the code of the Uboot loader by an agreed-upon calculation method (e.g., Hashing operation, which can be the same or different from the operation mode of the boot memory to check the SPL), so as to obtain an calculated value; and then the calculated value is compared with the read verification code, if the calculated value is consistent with the verification code, a checking result is normal; and if the calculated value is inconsistent with the verification code, the checking result is abnormal. When the checking result is normal, the target operating system is loaded by the Uboot loader.

In some embodiments, the boot memory can be, but is not limited to, a Boot ROM, which is a small mask ROM or a write-protect flash memory in an embedded processor chip, including a first piece of the code executed when the processor is powered on or reset.

In some embodiments, according to interconnection topology between the management system and the Host system, a system structure of a hardware resource partition system of the server management unit provided in the present disclosure performs integrated partitioning on all hardware resources of the BMC processor according to different cores of the processor. Different BMC processor cores independently manage different hardware resources, such that the effect of running various management systems in parallel by the same BMC processor is achieved.

This embodiment further provides a system running apparatus of a BMC. The apparatus is configured to implement the above embodiments and optional implementations, and what has been described will not be described again. As used below, the term "component" can be a combination of software and/or hardware that implements a predetermined function. Although the apparatus described in the following embodiments is preferably implemented in software, but implementations in hardware, or a combination of software and hardware, are also possible and conceived.

Fig. 7 is a structural block diagram of a system running apparatus of a BMC according to embodiments of the present disclosure. As shown in Fig. 7, the apparatus includes a startup component, a loading component, and a running component.

The startup component 702 is configured to start up a target operating system on a BMC, where the target operating system is configured to manage a target hardware partition among a plurality of hardware partitions divided on a server host system.

The loading component 704 is configured to load a target hardware interface for the target operating system, where the target hardware interface is configured to establish a connection between the target operating system and the target hardware partition.

The running component 706 is configured to run the target operating system on the BMC, wherein the target operating system is configured to manage the target hardware partition through the target hardware interface.

Through the above apparatus, the plurality of hardware interfaces are arranged on the BMC, and each hardware interface is configured to connect the hardware partition and the operating system corresponding to the hardware partition. When the target operating system runs on the BMC, the target hardware partition among the plurality of hardware partitions divided on the server host system can be managed through the target hardware interface corresponding to the target operating system, that is, by allocating the corresponding hardware interface to each operating system, different operating systems are allowed to manage the hardware partitions corresponding to the operating systems divided on the server host system, such that it is not necessary to modify the system architecture of the BMC according to the architectures of the hardware partitions of different server host systems, and the adaptability and universality of the hardware partitions of the server host system are improved. Therefore, the technical problem of low applicability of hardware partitions of a server host system can be solved, thereby achieving the technical effect of improving the applicability of the hardware partitions of the server host system.

In some embodiments, the startup component includes: a first loading unit, configured to execute, on the BMC, an SPL to load a Uboot loader; and a startup unit, configured to start up a kernel of the corresponding target operating system on each group of processor cores by the Uboot loader.

In some embodiments, the first loading unit is configured to: power on the BMC, and wake up one processor core; boot a boot loader in a boot memory to execute on the processor core; perform secure boot verification on the SPL through the boot loader; and when the SPL passes the secure boot verification, execute the SPL to boot the Uboot loader to execute a code.

In some embodiments, the loading component includes: a finding unit, configured to find, from processor cores and hardware interfaces having a correspondence relationship, the target hardware interface corresponding to a target processor core used by the target operating system, wherein the hardware interfaces on the BMC are allocated to each group of processor cores according to hardware architectures of the hardware partitions corresponding to each group of processor cores, so as to obtain the processor cores and the hardware interfaces having the correspondence relationship; and a second loading unit, configured to load the target hardware interface for the target operating system on the target processor core.

In some embodiments, the second loading unit is configured to: analyze a target device tree of the target processor core to obtain the target hardware interface, where the hardware interfaces on the BMC are allocated to each group of processor cores to obtain the processor cores and the hardware interfaces having the correspondence relationship, and physical addresses of the hardware interfaces on the BMC use a unified addressing scheme; load a driver of the target hardware interface on the target processor core; and boot a file system of the target operating system on the target processor core, so as to complete bootstrapping process of the target operating system.

In some embodiments, the system running apparatus of a BMC further includes: an acquisition component, configured to, before loading the target hardware interface for the target operating system, acquire the plurality of hardware partitions of the host system; an allocation component, configured to, before loading the target hardware interface for the target operating system, allocate the processor cores on the BMC for each target hardware partition among the plurality of hardware partitions to obtain the target processor cores, and allocate the hardware interfaces on the BMC for each target hardware partition to obtain the target hardware interfaces, wherein the target processor core at least meets a management running requirement of the target hardware partition, and the target hardware interface at least meets a hardware connection requirement of the target hardware partition; and an establishment component, configured to, before loading the target hardware interface for the target operating system, establish a correspondence relationship between the target processor core and the target hardware interface, so as to obtain the processor cores and the hardware interfaces having the correspondence relationship.

In some embodiments, the allocation component includes one of the following: a first allocation unit, configured to, evenly allocate the processor cores on the BMC to each target hardware partition; and a second allocation unit, configured to allocate one or more processor cores on the BMC for the target hardware partition according to a running architecture of each target hardware partition among the plurality of hardware partitions, so as to obtain the target processor cores.

In some embodiments, the allocation component further includes one of the following: a third allocation unit, configured to, when there is a first type of hardware interfaces on the BMC that has a number of resources greater than or equal to a number of resources required in the plurality of hardware partitions, allocate, according to the hardware architecture of each target hardware partition, the first type of hardware interfaces to the target hardware partition as target exclusive interfaces in the target hardware interfaces, where the target exclusive interface is designed as a hardware interface that is only allowed to be accessed by the target processor core; and an establishment unit, configured to, when there is a second type of hardware interfaces on the BMC that has a number of resources less than a number of resources required in the plurality of hardware interfaces, establish, as a target shared interface in the target hardware interfaces, a shared relationship between the target processor core and a reference processor core in the plurality of groups of processor cores on the BMC with respect to the second type of hardware interfaces, where the target shared interface is designed as a hardware interface that is allowed to be accessed by the target processor core and the reference processor core in the plurality of groups of processor cores.

In some embodiments, the running component includes: a first sending unit, configured to, when the target operating system has a requirement to access a target shared interface in the target hardware interface, send, by the target operating system, a first interrupt request to a reference processor core in a plurality of groups of processor cores on the BMC, where the target shared interface is designed as a hardware interface that is allowed to be accessed by the target processor core and the reference processor core used by the target operating system, and the first interrupt request is used for requesting the use of the target shared interface; a first receiving unit, configured to receive a second interrupt request returned by a reference operating system run on the reference processor core in response to the first interrupt request, where the second interrupt request is used for indicating that the target shared interface has been released; and an access unit, configured to, in response to the second interrupt request, access the target shared interface through the target operating system.

In some embodiments, the first sending unit is configured to: determine, by the target operating system, whether the target shared interface has been occupied; and when the target operating system does not occupy the target shared interface, send the first interrupt request to the reference processor core by the target operating system.

In some embodiments, the running component further includes: a second receiving unit, configured to receive, by the target operating system, a third interrupt request sent by the reference operating system, wherein the third interrupt request is used for requesting the use of the target shared interface; a determination unit, configured to determine, by the target operating system, whether the target shared interface is being used; a waiting unit, configured to, when the target shared interface is being used, wait for the end of the use of the target shared interface; a releasing unit, configured to, when the target shared interface is not used or the use of the target shared interface is ended, release the target shared interface; and a second sending unit, configured to send a fourth interrupt request to the reference operating system by the target operating system, where the fourth interrupt request is used for indicating that the target shared interface has been released.

It is to be noted that, each of the above components can be implemented by software or hardware. For the latter, it can be implemented in the following manners, but is not limited to the follow: the above components are all located in a same processor; or the above components are located in different processors in any combination.

The communication bus of the above server can be a Peripheral Component Interconnect (PCI) bus or an Extended Industry Standard Architecture (EISA) bus, etc. The communication bus can be divided into an address bus, a data bus, a control bus, and the like. The communication interface is configured to achieve communication between the above server and other devices.

The memory can include a RAM, or can include a Non-Volatile Memory (NVM), such as at least one disk memory. Optionally, the memory can also be at least one storage apparatus located remotely from the foregoing processor. In some embodiments, the above processor is a general processor, including a Central Processing Unit (CPU) and a Network Processor (NP), in some embodiments, the above processor is a Digital Signal Processor (DSP), an Application Specific Integrated Circuit (ASIC), a Field-Programmable Gate Array (FPGA) or other programmable logic devices, discrete gate or transistor logic devices, and discrete hardware components.

For the server, the server is at least highly scalable and stable. As the enterprise network is not possible to remain unchanged for a long time, for the network information technology today, if the server does not have certain extendibility, the future development of the enterprise is affected to impact the use of the enterprise, such that the extendibility is to become the most basic characteristics, later better utilization can be guaranteed when higher extendibility is realized. In addition to hardware extendibility, the extendibility also includes software extendibility, because the functions of the server are still very complex compared with a computer, it is important not only in the hardware configuration, but also in software configuration. Trying to achieve more functionality is also unthinkable without full software support.

In addition, since the server needs to process a large amount of data to support the continuous running of the services, the server also has a very important feature, namely, high stability, and if data transmission of the server cannot run stably, it will undoubtedly have a great impact on the services.

In the solution of the present disclosure, the server can realize comprehensive and flexible access of the operating system to the hardware controller regardless of expansion of the software resource or expansion of the hardware resource, thereby improving the extendibility of the server. Furthermore, through the access mechanism of the above operating system to the hardware controller, the hardware controller can be run more stability, thereby improving the stability of the server.

An embodiment of the present disclosure further provides a non-volatile readable storage medium. The non-volatile readable storage medium stores a computer program. Steps in any one of the above method embodiments are executed when the computer program is configured to run.

In some embodiments, the non-volatile readable storage medium can include, but is not limited to, a USB flash disk, a Read-Only Memory (ROM), a Random Access Memory (RAM), and various non-volatile readable storage media that can store computer programs, such as a mobile hard disk, a magnetic disk, or an optical disk.

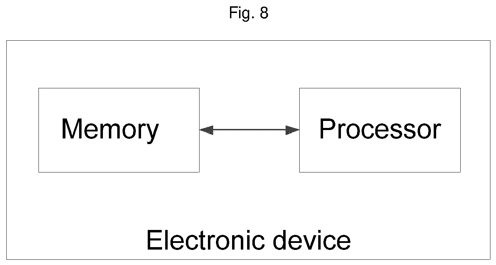

An embodiment of the present disclosure further provides an embodiment of an electronic device. Fig. 8 is a schematic diagram of an electronic device according to embodiments of the present disclosure. As shown in Fig. 8, the electronic device includes: one or more processors; and a memory, configured to store one or more programs. When the one or more programs are executed by the one or more processors, the one or more processors are configured to run the programs. When the programs are configured to be run, the above system running method of a BMC is executed.

In some embodiments, the above electronic device can further include a transmission device and an input/output device. The transmission device is connected to the processor. The input/output device is connected to the above processor.

For optional embodiments in this embodiment, refer to the embodiments described in the foregoing embodiments and the exemplary implementations, and this embodiment will not be repeated thereto.

It is apparent that those skilled in the art should understand that the above mentioned components or steps of the present disclosure can be implemented by a general computing device, and can also be gathered together on a single computing device or distributed in network composed of multiple computing devices. The above mentioned components or steps of the present disclosure can be implemented with program codes executable by the computing device, so that can be stored in a storage device for execution by the computing device, and in some cases, the steps shown or described can be performed in a different sequence than herein, or can be fabricated into individual integrated circuit components respectively, or multiple components or steps thereof are fabricated into a single integrated circuit component for implementation. In this way, the present disclosure is not limited to any specific combination of hardware and software.

The above are only the optional embodiments of the present disclosure and are not intended to limit the present disclosure. For those skilled in the art, the present disclosure can have various modifications and variations. Any modifications, equivalent replacements, improvements and the like made within the principle of the present disclosure shall fall within the scope of protection of the present disclosure.

## Claims

1. A system running method of a Baseboard Management Controller (BMC), wherein the system running method comprises:
starting up a target operating system on a BMC, wherein the target operating system is configured to manage a target hardware partition among a plurality of hardware partitions divided on a server host system;
loading a target hardware interface for the target operating system, wherein the target hardware interface is configured to establish a connection between the target operating system and the target hardware partition; and
running the target operating system on the BMC, wherein the target operating system is configured to manage the target hardware partition through the target hardware interface.

2. The method according to claim 1, wherein loading the target hardware interface for the target operating system comprises:
finding, from processor cores and hardware interfaces having a correspondence relationship, the target hardware interface corresponding to a target processor core used by the target operating system, wherein the hardware interfaces on the BMC are allocated to each group of processor cores according to hardware architectures of the hardware partitions corresponding to each group of processor cores, so as to obtain the processor cores and the hardware interfaces having the correspondence relationship; and
loading the target hardware interface for the target operating system on the target processor core.

3. The method according to claim 2, wherein loading the target hardware interface for the target operating system on the target processor core comprises:
analyzing a target device tree of the target processor core to obtain the target hardware interface, wherein the hardware interfaces on the BMC are allocated to each group of processor cores to obtain the processor cores and the hardware interfaces having the correspondence relationship, and physical addresses of the hardware interfaces on the BMC use a unified addressing scheme;
loading a driver of the target hardware interface on the target processor core; and
booting a file system of the target operating system on the target processor core, so as to complete bootstrapping process of the target operating system.

4. The method according to claim 2, wherein before loading the target hardware interface for the target operating system, the method further comprises:
acquiring the plurality of hardware partitions of a host system;
allocating the processor cores on the BMC for each target hardware partition among the plurality of hardware partitions to obtain the target processor cores, and allocating the hardware interfaces on the BMC for each target hardware partition to obtain the target hardware interfaces, wherein the target processor core at least meets a management running requirement of the target hardware partition, and the target hardware interface at least meets a hardware connection requirement of the target hardware partition; and
establishing a correspondence relationship between the target processor core and the target hardware interface, so as to obtain the processor cores and the hardware interfaces having the correspondence relationship.

5. The method according to claim 4, wherein allocating the processor cores on the BMC for each target hardware partition among the plurality of hardware partitions to obtain the target processor cores comprises at least one of the following:
evenly allocating the processor cores on the BMC to each target hardware partition; or
allocating one or more processor cores on the BMC for the target hardware partition according to a running architecture of each target hardware partition among the plurality of hardware partitions, so as to obtain the target processor cores.

6. The method according to claim 4, wherein allocating the hardware interfaces on the BMC for each target hardware partition to obtain the target hardware interfaces comprises at least one of the following:
when there is a first type of hardware interfaces on the BMC that has a number of resources greater than or equal to a number of resources required in the plurality of hardware partitions, allocating, according to the hardware architecture of each target hardware partition, the first type of hardware interfaces to the target hardware partition as target exclusive interfaces in the target hardware interfaces, wherein the target exclusive interface is designed as a hardware interface that is only allowed to be accessed by the target processor core; or
when there is a second type of hardware interfaces on the BMC that has a number of resources less than a number of the resources required in the plurality of hardware partitions, establishing, as a target shared interface in the target hardware interfaces, a shared relationship between the target processor core and a reference processor core in a plurality of groups of processor cores on the BMC with respect to the second type of hardware interfaces, wherein the target shared interface is designed as a hardware interface that is allowed to be accessed by the target processor core and the reference processor core in the plurality of groups of processor cores.

7. The method according to claim 1, wherein running the target operating system on the BMC comprises:
when the target operating system has a requirement to access the target shared interface in the target hardware interface, sending, by the target operating system, a first interrupt request to the reference processor core in the plurality of groups of processor cores on the BMC, wherein the target shared interface is designed as the hardware interface that is allowed to be accessed by the target processor core and the reference processor core used by the target operating system, and the first interrupt request is used for requesting an use of the target shared interface;
receiving a second interrupt request returned by a reference operating system run on the reference processor core in response to the first interrupt request, wherein the second interrupt request is used for indicating that the target shared interface has been released; and
in response to the second interrupt request, accessing the target shared interface through the target operating system.

8. The method according to claim 7, wherein sending, by the target operating system, the first interrupt request to the reference processor core in the plurality of groups of processor cores on the BMC comprises:
determining, by the target operating system, whether the target shared interface has been occupied; and
when the target operating system does not occupy the target shared interface, sending the first interrupt request to the reference processor core by the target operating system.

9. The method according to claim 7, wherein after accessing the target shared interface through the target operating system, the method further comprises:
receiving, by the target operating system, a third interrupt request sent by the reference operating system, wherein the third interrupt request is used for requesting the use of the target shared interface;
determining, by the target operating system, whether the target shared interface is being used;
when the target shared interface is being used, waiting for an end of the use of the target shared interface;
when the target shared interface is not used or the use of the target shared interface is ended, releasing the target shared interface; and
sending a fourth interrupt request to the reference operating system by the target operating system, wherein the fourth interrupt request is used for indicating that the target shared interface has been released.

10. The method according to claim 1, wherein starting up the target operating system on the BMC comprises:
executing, on the BMC, a Secondary Program Loader (SPL) to load a Universal Boot Loader (Uboot loader); and
starting up a kernel of a corresponding target operating system on each group of processor cores by the Uboot loader.

11. The method according to claim 10, wherein executing, on the BMC, the SPL to load the Uboot loader comprises:
powering on the BMC, and waking up one processor core;
booting a boot loader in a boot storage to execute on the processor core;
performing secure boot verification on the SPL through the boot loader; and
when the SPL passes the secure boot verification, executing the SPL to boot the Uboot loader to execute a code.

12. A Baseboard Management Controller (BMC), comprising: a target operating system and a target hardware interface, wherein
the target hardware interface is configured to connect the target operating system and a target hardware partition among a plurality of hardware partitions on a server host system; and
the target operating system is configured to manage the target hardware partition through the target hardware interface.

13. The BMC according to claim 12, wherein the target hardware interface comprises: a target exclusive interface and/or a target shared interface, wherein
the target exclusive interface is designed as a hardware interface that is only allowed to be accessed by a target processor core in which the target operating system is located; and
the target shared interface is designed as a hardware interface that is allowed to be accessed by the target processor core and a reference processor core in a plurality of groups of processor cores.

14. The BMC according to claim 12, wherein a target device tree is deployed in the target operating system, the target device tree is configured to load a driver of the target hardware interface, and physical addresses of hardware interfaces on the BMC use a unified addressing scheme.

15. The BMC according to claim 14, further comprising a Universal Boot Loader (Uboot loader), wherein
the Uboot loader is configured to start up a kernel of a corresponding target operating system on each group of processor cores on the BMC; and
a kernel of the target operating system is configured to analyze the driver of the target hardware interface loaded by the target device tree.

16. The BMC according to claim 15, further comprising a Secondary Program Loader (SPL), wherein
the SPL is configured to boot the Uboot loader to execute a code.

17. The BMC according to claim 16, further comprising a boot storage, wherein
the boot storage is configured to perform secure boot verification on the SPL.

18. A server, comprising a Baseboard Management Controller (BMC) and a server host system, wherein
the BMC comprises a target operating system and a target hardware interface, the server host system comprises a plurality of hardware partitions, and the target hardware interface establishes a connection between the target operating system and a target hardware partition among the plurality of hardware partitions; and
the BMC is configured to manage the target hardware partition through the target operating system.

19. The server according to claim 18, wherein the target hardware interface comprises: a target exclusive interface and/or a target shared interface, wherein
the target exclusive interface is designed as a hardware interface that is only allowed to be accessed by a target processor core in which the target operating system is located, and the target shared interface is designed as a hardware interface that is allowed to be accessed by the target processor core and a reference processor core in a plurality of groups of processor cores;
the target exclusive interface is directly connected to the target hardware partition; and
the target shared interface is connected to a partition switching device, and the partition switching device is separately connected to the target hardware partition and a reference hardware partition corresponding to the reference processor core.

20. A system running apparatus of a Baseboard Management Controller (BMC), wherein the system running apparatus comprises:
a startup component, configured to start up a target operating system on a BMC, wherein the target operating system is configured to manage a target hardware partition among a plurality of hardware partitions divided on a server host system;
a loading component, configured to load a target hardware interface for the target operating system, wherein the target hardware interface is configured to establish a connection between the target operating system and the target hardware partition; and
a running component, configured to run the target operating system on the BMC, wherein the target operating system is configured to manage the target hardware partition through the target hardware interface.

21. A non-volatile readable storage medium, having a computer program stored therein, wherein the computer program, when executed by a processor, implements steps of the method according to any one of claims 1 to 11.

22. An electronic device, comprising a memory, a processor, and a computer program that is stored in the memory and executable on the processor, wherein the processor, when executing the computer program, implements steps of the method according to any one of claims 1 to 11.
